(19) Europäisches Patentamt / European Patent Office / Office européen des brevets

(11) **EP 3 147 271 B1**

(12) **EUROPEAN PATENT SPECIFICATION**

(45) Date of publication and mention
of the grant of the patent:
**22.12.2021 Bulletin 2021/51**

(21) Application number: **15795752.3**

(22) Date of filing: **18.05.2015**

(51) Int Cl.:
*C04B 41/63* (2006.01)    *B32B 27/00* (2006.01)
*C04B 41/71* (2006.01)    *C08J 7/04* (2020.01)
*B32B 7/06* (2019.01)    *C09D 133/06* (2006.01)
*C09D 175/16* (2006.01)    *B32B 27/40* (2006.01)
*B05D 1/28* (2006.01)

(86) International application number:
**PCT/JP2015/064230**

(87) International publication number:
**WO 2015/178353 (26.11.2015 Gazette 2015/47)**

(54) **LAMINATED FILM FOR FORMING CONCRETE SURFACE COATING LAYER, CONCRETE BUILDING MATERIAL, AND METHOD OF MANUFACTURING THE SAME**

MEHRSCHICHTFOLIE ZUR HERSTELLUNG EINER BETONFLÄCHENBESCHICHTUNG, BETONBAUMATERIAL UND VERFAHREN ZUR HERSTELLUNG DAVON

FILM STRATIFIÉ POUR FORMER UNE COUCHE DE REVÊTEMENT D'UNE SURFACE EN BÉTON, MATÉRIAU DE CONSTRUCTION EN BÉTON ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2014 JP 2014105265**
**25.09.2014 JP 2014195899**
**04.03.2015 JP 2015042320**

(43) Date of publication of application:
**29.03.2017 Bulletin 2017/13**

(73) Proprietor: **Mitsubishi Chemical Corporation**
**Tokyo 1008251 (JP)**

(72) Inventor: **NAKAJIMA, Hiroyuki**
**Chiyoda-ku,**
**Tokyo 1008251 (JP)**

(74) Representative: **Kuhnen & Wacker**
**Patent- und Rechtsanwaltsbüro PartG mbB**
**Prinz-Ludwig-Straße 40A**
**85354 Freising (DE)**

(56) References cited:
EP-A1- 2 653 515          EP-A2- 1 273 434
WO-A1-2006/082776      JP-A- H0 494 931
JP-A- S6 264 544          JP-A- 2000 127 328
JP-A- 2007 268 937      JP-A- 2009 291 967
US-A- 5 928 778

**Description**

[Technical Field]

The present invention relates to a laminated film for forming a concrete surface coating layer, a concrete building material, and a method of manufacturing the same. More specifically, the present invention relates to a laminated film for forming a concrete surface coating layer, which is highly protective, for protecting the surface of the concrete from damage, and has high surface smoothness, for smoothing the surface of the concrete so as to improve the design characteristics thereof. The present invention also relates to a concrete building material manufactured using the laminated film of the present invention and to a method of manufacturing the same.

[Background Art]

Coating layers are formed by applying paintings on the surface of concrete, such as autoclaved lightweight concrete (ALC), which is a building material, in order to protect the base material, prevent performance degradation due to water infiltration, prevent neutralization due to infiltration by carbon dioxide, and the like. In particular, autoclaved lightweight concrete is generally made into boards in manufacturing plants and then transported to construction sites, where it is used to construct frameworks so as to build buildings, the outer wall surfaces of which are subsequently painted. There are various problems with such an autoclaved lightweight concrete board, such as the tendency for damage such as chipping to occur during transport, due to the foamed structure, the tendency to shed dust from fine cracks, chips and the like during transport and construction, again due to the foamed structure, and the difficulty of imparting design characteristics due to irregularities caused by the foamed structure at the surface.

Painting methods have commonly been employed for forming coating layers on the surface of such concrete and, in particular, an autoclaved lightweight concrete board. In painting, it is common to overlay painting materials, such as in an "undercoat," a "middle coat," and a "top coat." These painting materials are often dispersed or diluted in a liquid, and applied to the surface of the concrete, and in particular, an autoclaved lightweight concrete board, whereafter the liquid components are dried, with this process often being repeated.

However, if the liquid component for producing the painting material is an organic solvent, there will be problems in terms of odor and concerns in terms of adverse effects on people. Exposure to organic solvents in overcoating has become a problem in work. In order to improve on these disadvantages, methods are currently very popular in which emulsification techniques are employed to replace the liquid component with water. However, a new problem has arisen in so much as considerable time is required for drying in this case as well, such that when overcoating is considered, a great deal of time will be required for painting.

Furthermore, in terms of other methods for forming coating layers by applying paintings on a concrete surface, methods have been proposed such as applying a thermosetting resin powder, to which a siliceous raw material powder has been admixed, to the concrete surface, and setting the thermosetting resin powder by way of autoclave curing (for example, see PTL 1).

PTL2 discloses a decorative material comprising a substrate and an abrasion-resistant coating layer formed on said substrate, said abrasion-resistant coating layer comprising spherical inorganic particles and a binder comprising a crosslinkable resin comprising at least 10% by weight of a polyether urethane (meth) acrylate. Specifically the coating layer is formed by the ionizing-radiation-curing of a resin composition comprising a photopolymerization initiator.

[Citation List]

[Patent Literature]

[PTL 1] Japanese Unexamined Patent Application Publication No. H11-79869

[PTL2] US 5 928 778 A

[Summary of Invention]

[Technical Problem]

However, with the technology disclosed in PTL 1, in order to form the coating layer on the surface of the concrete, the coating layer had to be applied by electrostatic spraying or the like, such that the productivity and workability are inferior. Furthermore, there is a demand for further improvement in terms of concrete surface protection, and in terms of surface smoothness, as smoothing the concrete surface improves design characteristics.

Thus, with such a background, an object of the present invention is to form a coating layer on a concrete surface, allowing for excellent productivity and workability, which permeates into the concrete well (good adhesion with the concrete), and which is excellent in terms of protecting the surface of the concrete and in terms of surface smoothness.

[Solution to Problem]

Thus, as a reflection of such facts, and as the result of earnest study undertaken by the present inventors, it is discovered that, in forming a coating layer on a concrete surface using a curable resin composition, by bonding a laminated film of a layer comprising the curable resin composition and a support film to a concrete surface and curing the curable resin composition layer, a coating layer was formed allowing for excellent productivity and workability, which permeates into the concrete well (good adhesion with the concrete), and which is excellent in terms of protecting the surface of the concrete and in terms of surface smoothness, whereby the present invention is completed.

That is to say, the gist of the present invention is as in <1> to < 10> below.

<1> A laminated film for forming a concrete surface coating layer, wherein a layer comprising a curable resin composition and a support film are laminated,

the curable resin composition is a curable resin composition comprising: a binder polymer (A); a reactive oligomer (B) having one or more unsaturated groups; a reactive monomer (C) having one or more unsaturated groups; and a polymerization initiator (D), the binder polymer (A) is a (meth)acrylic resin (a1),
the reactive oligomer (B) having one or more unsaturated groups is a urethane (meth)acrylate compound (b1),
the polymerization initiator (D) is a thermal polymerization initiator and is an azobis compound having a 10-hour half-life temperature of 50°C or more, and
the thickness of the layer comprising the curable resin composition is 30 $\mu$m or more,
and after curing the layer comprising the curable resin composition, the support film may be peeled off from said layer, as necessary.

<2> The laminated film for forming a concrete surface coating layer according to <1> above, wherein the reactive monomer (C) having one or more unsaturated groups is a polyfunctional (meth)acrylate compound (c1).
<3> The laminated film for forming a concrete surface coating layer according to any of <1> to <2> above, wherein the curable resin composition comprises a filler (E).
<4> The laminated film for forming a concrete surface coating layer according to <3> above, wherein the curable resin composition further comprises a foaming agent (F).
<5> A laminated film for forming a concrete surface coating layer wherein a support film, a layer comprising the curable resin composition according to <3> or <4> above, and a layer comprising the curable resin composition according to any of <1> to <2> above are laminated in a layer configuration in this order.
<6> The laminated film for forming a concrete surface coating layer according to any of <1> to <5> above, wherein a protective film is laminated on the side opposite to the support film, in the thickness direction.
<7> The laminated film for forming a concrete surface coating layer according to any of <1> to <6> above, wherein the concrete is autoclaved lightweight concrete.
<8> A concrete building material comprising concrete, and a concrete surface coating layer, which is formed by curing a layer comprising the curable resin composition according to any of < 1> to <7> above, and which coats the surface of the concrete.
<9> The concrete building material according to <8> above, wherein the concrete is autoclaved lightweight concrete.
<10> A method for manufacturing the concrete building material according to <8> or <9> above, comprising:

a step of bonding the laminated film for forming a concrete surface coating layer according to any of <1> to <7> above to the concrete so that the layer comprising the curable resin composition contacts the surface of the concrete; and
a step of curing by heat the layer comprising the curable resin composition so as to form a concrete surface coating layer on the surface of the concrete.

[Advantageous Effects of Invention]

In forming a coating layer on a concrete surface, the laminated film for forming a concrete surface coating layer of the present invention provides the advantageous effects of excellent productivity and workability, good permeation into the concrete well (good adhesion with the concrete), excellent protection of the surface of the concrete, and excellent surface smoothness.

[Brief Description of Drawings]

[FIG. 1] FIG. 1 is a sectional view schematically illustrating one example of the laminated film for forming a concrete surface coating layer of the present invention.
[FIG. 2] FIG. 2 is a sectional view schematically illustrating another example of the laminated film for forming a concrete surface coating layer of the present invention.
[FIG. 3] FIG. 3 is a sectional view schematically illustrating a process of forming a coating layer on the surface of concrete using the laminated film for forming a concrete surface coating layer of the present invention shown in FIG. 1.

[Description of the Embodiments]

Hereafter, the present invention is described in detail, setting forth examples of preferred embodiments.
The laminated film for forming a concrete surface coating layer of the present invention is one wherein a layer comprising a curable resin composition and a support film are laminated.
The curable resin composition is described below.
The curable resin composition used in the present invention is a resin composition that is cured by heat, and with a view to imparting good weather resistance, this is a thermosetting resin composition. Such a curable resin composition comprises: a binder polymer (A); a reactive oligomer (B) having one or more unsaturated groups; a reactive monomer (C) having one or more unsaturated groups; and a polymerization initiator (D).
The components are described below.

<Binder Polymer (A)>

The binder polymer (A) in the present invention is used for suitable flexibility in the uncured film, suppression of surface tack, improved durability in the cured film, and adjustment of hardness.
According to the present invention the binder polymer (A) is (meth)acrylic resin (a1) because of the durability of the cured film and the ease of adjusting the hardness.
The (meth)acrylic resin (a1) is described more specifically below.
Note that, (meth)acrylic refers to acrylic or methacrylic, and (meth)acrylate refers to acrylate or methacrylate.

<(Meth)acrylic resin (a1)>

The (meth)acrylic resin (a1) in the present invention results from polymerizing a monomer component comprising a (meth)acrylic monomer. One type of (meth)acrylic resin (a1) may be used alone or two or more types may be used in combination.
The (meth)acrylic resin (a1) preferably comprises a (meth)acrylic acid ester monomer (a2) as a main polymerization component, and if necessary can have a functional group-containing monomer (a3) and another copolymerizable monomer (a4) as copolymer components.
Examples of this (meth)acrylic acid ester monomer (a2) include aliphatic (meth)acrylic acid ester monomers such as (meth)acrylic acid alkyl esters, and aromatic (meth)acrylic acid ester monomers such as (meth)acrylic acid phenyl esters.
In this (meth)acrylic acid alkyl ester, the number of carbon atoms in the alkyl group is usually preferably 1 to 12, particularly preferably 1 to 8, and more preferably 4 to 8; specifically, this includes methyl (meth)acrylate, ethyl (meth)acrylate, n-butyl (meth)acrylate, iso-butyl (meth)acrylate, tert-butyl (meth)acrylate, n-propyl (meth)acrylate, n-hexyl (meth)acrylate, 2-ethylhexyl (meth)acrylate, n-octyl (meth)acrylate, isodecyl (meth)acrylate, lauryl (meth)acrylate, cetyl (meth)acrylate, stearyl (meth)acrylate, cyclohexyl (meth)acrylate, isobornyl (meth)acrylate and the like. Furthermore, benzyl (meth)acrylate and phenoxyethyl (meth)acrylate and the like may be mentioned for this (meth)acrylic acid phenyl ester.
Other (meth)acrylic acid ester monomers (a2) include tetrahydrofurfuryl (meth)acrylate and the like. One type of these may be used alone, or in combinations of two or more.
Among these (meth)acrylic acid ester monomers (a2), in terms of copolymerization characteristics, adhesive properties, ease of handling and availability of raw materials, methyl (meth)acrylate, n-butyl (meth)acrylate, and 2-ethylhexyl (meth)acrylate are preferably used.

Examples of the functional group-containing monomer (a3) include hydroxyl group-containing monomers, carboxyl group-containing monomers, alkoxy group-containing monomers, phenoxy group-containing monomers, amide group-containing monomers, amino group-containing monomers, other nitrogen-containing monomers, glycidyl group-containing monomers, phosphoric acid group-containing monomers, sulfonic acid group-containing monomers, and the like, one type of which may be used alone, or in combinations of two or more.

Examples of the hydroxyl group-containing monomer include primary hydroxyl group-containing monomers, secondary hydroxyl group-containing monomers, and tertiary hydroxyl group-containing monomers. Examples of primary hydroxyl group-containing monomers include primary hydroxyl group-containing hydroxyalkyl esters of (meth)acrylic acid, such as 2-hydroxyethyl (meth)acrylate, 4-hydroxybutyl (meth)acrylate, 5-hydroxypentyl (meth)acrylate, 6-hydroxyhexyl (meth)acrylate, 8-hydroxyoctyl (meth)acrylate, 10-hydroxydecyl (meth)acrylate, and (4-hydroxymethyl cyclohexyl) methyl (meth)acrylate; caprolactone-modified monomers such as caprolactone-modified 2-hydroxyethyl (meth)acrylate; 2-acryloyloxyethyl-2-hydroxyethyl phthalic acid; N-methylol (meth)acrylamide; N-hydroxyethyl (meth)acrylamide; and the like. Examples of secondary hydroxyl group-containing monomers include secondary hydroxyl group-containing (meth)acrylic acid hydroxyalkyl esters such as 2-hydroxypropyl (meth)acrylate and 2-hydroxybutyl (meth)acrylate; 2-hydroxy-3- phenoxy propyl (meth)acrylate; 3-chloro-2-hydroxypropyl (meth)acrylate; 2-hydroxy-3-phenoxypropyl (meth)acrylate; and the like. Examples of tertiary hydroxyl group-containing monomers include 2,2-dimethyl-2-hydroxyethyl (meth)acrylate.

Furthermore, polyethylene glycol derivatives such as diethylene glycol mono(meth)acrylate and polyethylene glycol mono(meth)acrylate; polypropylene glycol derivatives such as polypropylene glycol mono(meth)acrylate; and oxyalkylene-modified monomers such as polyethylene glycol-polypropylene glycol mono (meth)acrylate, poly(ethylene glycol-tetramethylene glycol) mono(meth)acrylate, and poly(propylene glycol-tetramethylene glycol) mono(meth)acrylate may be used as the hydroxyl group-containing monomer.

Examples of the carboxyl group-containing monomer include acrylic acid, methacrylic acid, crotonic acid, maleic acid, maleic anhydride, itaconic acid, fumaric acid, acrylamide N-glycolic acid, cinnamic acid, Michael additions of (meth)acrylic acid (for example, acrylic acid dimer, methacrylic acid dimer, acrylic acid trimer, methacrylic acid trimer, acrylic acid tetramer, methacrylic acid tetramer and the like), 2-(meth)acryloyloxyethyl dicarboxylic acid monoesters (for example, 2-acryloyloxyethyl succinic acid monoester, 2-methacryloyloxyethyl succinic acid monoester, 2-acryloyloxyethyl phthalic acid monoester, 2-methacryloyloxyethyl phthalic acid monoester, 2-acryloyloxyethyl hexahydrophthalic acid monoester, 2-methacryloyloxyethyl hexahydrophthalic acid monoester and the like) and the like. Note that these carboxyl group-containing monomers may be used directly as acids, or may be used in the form of salts, wherein these have been neutralized with an alkali.

Examples of the alkoxy group-containing monomer include aliphatic (meth)acrylic acid esters such as 2-methoxyethyl (meth)acrylate, 2-ethoxyethyl (meth)acrylate, 3-methoxybutyl (meth)acrylate, 2-butoxyethyl (meth)acrylate, 2-butoxy diethylene glycol (meth)acrylate, methoxy diethylene glycol (meth)acrylate, methoxy triethylene glycol (meth)acrylate, ethoxy diethylene glycol (meth)acrylate, methoxy dipropylene glycol (meth)acrylate, methoxy polyethylene glycol (meth)acrylate, octoxy polyethylene glycol-polypropylene glycol mono(meth)acrylate, lauroxy polyethylene glycol mono(meth)acrylate, and stearoxy polyethylene glycol mono(meth)acrylate; and examples of the phenoxy group-containing monomer include aromatic (meth)acrylic acid esters such as 2-phenoxyethyl (meth)acrylate, phenoxy polyethylene glycol (meth)acrylate, phenoxy polyethylene glycol-polypropylene glycol (meth)acrylate, and nonylphenol ethylene oxide adduct (meth)acrylate.

Examples of the amide group-containing monomer include acrylamide, methacrylamide, N-(n-butoxy alkyl) acrylamides, N-(n-butoxy alkyl) methacrylamides, N,N-dimethyl (meth)acrylamide, N,N-diethyl (meth)acrylamide, N,N-dimethylaminopropyl (meth)acrylamide, acrylamide-3-methylbutyl methylamine, dimethylamino alkyl acrylamides, dimethylamino alkyl methacrylamides, and the like.

Examples of the amino group-containing monomer include dimethyl aminoethyl (meth)acrylate, diethylaminoethyl (meth)acrylate, quaternary compounds thereof, and the like.

Other than the aforementioned amide group-containing monomers and the aforementioned amino group-containing monomers, further examples of nitrogen-containing monomers include acryloyl morpholine and the like.

Examples of the glycidyl group-containing monomer include glycidyl (meth)acrylate, allyl glycidyl ether and the like.

Examples of the phosphoric acid group-containing monomer include 2-(meth)acryloyloxyethyl acid phosphate, bis(2-(meth)acryloyloxyethyl) acid phosphate, and the like.

Examples of the sulfonic acid group-containing monomer include: olefin sulfonic acids such as ethylene sulfonic acid, allyl sulfonic acid and methallyl sulfonic acid; 2-acrylamido-2-methylpropane sulfonic acid; styrene sulfonic acid; or salts thereof; and the like.

Examples of other copolymerizable monomers (a4) include monomers such as acrylonitrile, methacrylonitrile, styrene, α-methyl styrene, vinyl acetate, vinyl propionate, vinyl stearate, vinyl chloride, vinylidene chloride, alkyl vinyl ethers, vinyl toluene, vinylpyridine, vinylpyrrolidone, itaconic acid dialkyl esters, fumaric acid dialkyl esters, allyl alcohol, acrylic chloride, methyl vinyl ketone, N-acrylamide methyl trimethylammonium chloride, allyl trimethyl ammonium chloride, dimethylallyl vinyl ketone and the like.

Furthermore, for the purpose increasing molecular weight, combined use may be made of compounds having two or more ethylenically unsaturated groups, such as ethylene glycol di(meth)acrylate, diethylene glycol di(meth)acrylate, triethylene glycol di(meth)acrylate, polyethylene glycol di(meth)acrylate, propylene glycol di(meth)acrylate, divinylbenzene and the like.

In the (meth)acrylic resin (a1), the content ratio of the (meth)acrylic acid ester monomer (a2), the functional group-containing monomer (a3), and the other copolymerizable monomer (a4) is: preferably 10 to 100 wt%, and particularly preferably 20 to 95 wt%, of the (meth)acrylic acid ester monomer (a2); preferably 0 to 90 wt%, and particularly preferably 5 to 80 wt%, of the functional group-containing monomer (a3); and preferably 0 to 50% by weight, and particularly preferably 5 to 40 wt%, of the other copolymerizable monomer (a4).

With a view to excellent compatibility with a suitable urethane (meth)acrylate compound as the reactive oligomer (B) having one or more unsaturated groups, and with a view to the weather resistance and hardness adjustment of the finished coating layer, the (meth)acrylic resin (a1) in the present invention is preferably a polymer having methyl (meth)acrylate as a polymerization component, and particularly preferably is a polymer having methyl methacrylate as a polymerization component, and more preferably is polymethyl methacrylate.

In the present invention, the (meth)acrylic resin (a1) can be produced by polymerizing the monomer components (a2) to (a4). This polymerization can be performed by conventionally known methods such as solution radical polymerization, suspension polymerization, bulk polymerization, emulsion polymerization, or the like. For example, in an organic solvent, the polymerization monomers such as the (meth)acrylic acid ester monomer (a2), the functional group-containing monomer (a3), and the other copolymerizable monomer (a4), a polymerization initiator (azobisisobutyronitrile, azobisisovaleronitrile, benzoyl peroxide, or the like) are mixed or instilled and polymerized for 2 to 20 hours under reflux conditions or at 50 to 90°C.

Examples of the organic solvent used in the polymerization reaction include: aromatic hydrocarbons such as toluene and xylene; aliphatic hydrocarbons such as hexane; esters such as ethyl acetate and butyl acetate; aliphatic alcohols such as n-propyl alcohol and isopropyl alcohol; and ketones such as acetone, methylethyl ketone, methylisobutyl ketone and cyclohexanone.

The glass transition temperature (Tg) of the (meth)acrylic resin (a1) is usually 40 to 120°C, and preferably 60 to 110°C. If this glass transition temperature is too high, the amount of the (meth)acrylic resin (a1) that can be admixed when preparing the curable resin composition will be limited and the range in which the durability and flexibility of the coating layer can be adjusted will be restricted, such that the coating layer tends to have lower durability and to be excessively hard, with lower strength, while if the glass transition temperature is too low, the heat resistance of the coating layer tends to be lower.

Note that the glass transition temperature (Tg) is calculated by way of the following Fox formula.

$$1/Tg = w1/Tg1 + w2/Tg2 + \cdots\cdots\cdots Wk/Tgk$$

Herein, Tg is the glass transition temperature of the copolymer; Tg1, Tg2, ⋯⋯⋯ Tgk represent the Tg of the homo-copolymer of each monomer component, w1, w2, ⋯ ....... wk represent the mole fraction of each monomer component, and w1 + w2 + ⋯⋯⋯ wk = 1.

The weight average molecular weight of the (meth)acrylic resin (a1) obtained in this manner is normally 10,000 to 3,000,000 and preferably 20,000 to 2,500,000.

If this weight average molecular weight is too low, there is a tendency for the uncured curable resin composition to be weak, while the tack is unduly high and there is a tendency to inferior handling, in addition to which there is a tendency for the cured curable resin composition to be brittle. Furthermore, if the weight average molecular weight is too high, there is a tendency for this to lead to inferior application characteristics such as the viscosity of the curable resin composition before application being too high, or it being difficult to increase the concentration, in addition to which there is a tendency to loss of flexibility in the curable resin composition before curing and difficulties in winding into a roll.

Note that the weight average molecular weight is as converted to standard polystyrene molecular weight, and is measured with high performance liquid chromatography ("Waters 2695 (main unit)" and "Waters 2414 (detector)" made by Nippon Waters Co., Ltd.), using a series of three columns: Shodex GPC KF-806L (exclusion limit molecular weight: $2 \times 10^7$, separation range: 100 to $2 \times 10^7$, number of theoretical plates: 10,000 plates/column, packing material: styrene-divinylbenzene copolymer, packing particle size: 10 $\mu$m).

<Reactive oligomer (B) having one or more unsaturated groups>

According to the present invention the reactive oligomer (B) is a urethane (meth)acrylate compound (b1) ; such compound imparts a suitable degree of elasticity to the film after curing.

Hereafter, the urethane (meth)acrylate compound (b1) is more specifically described.

<Urethane (meth)acrylate compound (b1)>

A urethane (meth)acrylate compound (b1) obtained by reacting a hydroxyl group-containing (meth)acrylate compound (b2), a polyvalent isocyanate compound (b3) and a polyol compound (b4) may be mentioned for the urethane (meth)acrylate compound (b1) used in the present invention.

The weight average molecular weight of the urethane (meth)acrylate compound (b1) used in the present invention is preferably 500 to 50,000, and more preferably from 1,000 to 30,000. If this weight average molecular weight is too low, the coating layer tends to be brittle, while if it is too high, the impact resistance of the coating layer tends to be lower.

Note that the weight average molecular weight is a weight average molecular weight as converted to standard polystyrene molecular weight, and is measured with high performance liquid chromatography ("Shodex GPC system-11 model" made by Showa Denko K.K.), using a series of three columns: Shodex GPC KF-806L (exclusion limit molecular weight: $2 \times 10^7$, separation range: 100 to $2 \times 10^7$, number of theoretical plates: 10,000 plates/column, packing material: styrene-divinylbenzene copolymer, packing particle size: 10 $\mu$m).

The viscosity at 60°C of the urethane (meth)acrylate compound (b1) is preferably from 500 to 150,000 mPa·s, particularly preferably 500 to 120,000 mPa·s, and more preferably 1000 to 100,000 mPa·s. If this viscosity is outside the aforementioned range, the application properties tend to be inferior when the coating layer formed.

Note that the viscosity can be measured with an E-type viscometer.

<Hydroxyl group-containing (meth)acrylate compound (b2)>

Examples of the hydroxyl group-containing (meth)acrylate compound (b2) include: hydroxyalkyl (meth)acrylates such as 2-hydroxyethyl (meth)acrylate, 2-hydroxypropyl (meth)acrylate, 2-hydroxybutyl (meth)acrylate, 4-hydroxybutyl (meth)acrylate, and 6-hydroxyhexyl (meth)acrylate; 2-hydroxyethyl acryloyl phosphate; 2-(meth)acryloyloxyethyl-2-hydroxypropyl phthalate; caprolactone-modified 2-hydroxyethyl (meth)acrylate; dipropylene glycol (meth)acrylate; fatty acid-modified-glycidyl (meth)acrylate; polyethylene glycol mono(meth)acrylate; polypropylene glycol mono(meth)acrylate; 2-hydroxy-3-(meth)acryloyloxypropyl (meth)acrylate; glycerin di(meth)acrylate; 2-hydroxy-3-acryloyloxypropyl methacrylate; pentaerythritol tri(meth)acrylate; caprolactone-modified pentaerythritol tri(meth)acrylate; ethylene oxide modified pentaerythritol tri(meth)acrylate; dipentaerythritol penta(meth)acrylate; caprolactone-modified dipentaerythritol penta(meth)acrylate; and ethylene oxide-modified dipentaerythritol penta(meth)acrylate.

From among these, a hydroxyl group (meth)acrylate compound having one ethylenically unsaturated group is preferred, because it mitigates curing shrinkage when forming a coating layer, particularly preferably this is a hydroxyalkyl (meth)acrylate such as 2-hydroxyethyl (meth)acrylate, 2-hydroxypropyl (meth)acrylate, 2-hydroxybutyl (meth)acrylate, 4-hydroxybutyl (meth)acrylate, or 6-hydroxyhexyl (meth)acrylate, and using a 2-hydroxyethyl (meth)acrylate is more preferable, because of its excellent reactivity and versatility.

One type of these may be used alone, or in combinations of two or more.

<Polyvalent isocyanate compound (b3)>

Examples of the polyvalent isocyanate compound (b3) include: aromatic polyisocyanates, such as tolylene diisocyanate, diphenylmethane diisocyanate, polyphenylmethane polyisocyanate, modified diphenylmethane diisocyanate, xylylene diisocyanate, tetramethylxylylene diisocyanate, phenylene diisocyanate, and naphthalene diisocyanate; aliphatic polyisocyanates such as hexamethylene diisocyanate, trimethylhexamethylene diisocyanate, lysine diisocyanate, and lysine triisocyanate; alicyclic polyisocyanates such as hydrogenated diphenylmethane diisocyanate, hydrogenated xylylene diisocyanate, isophorone diisocyanate, norbornene diisocyanate, and 1,3-bis(isocyanatomethyl)cyclohexane; or trimer compounds or multimeric compounds of these polyisocyanates; allophanate polyisocyanates; buret polyisocyanates; water-dispersed polyisocyanates (for example, "Aquanate 100", "Aquanate 110", "Aquanate 200" "Aquanate 210" and the like, made by Nippon Polyurethane Industry Co., Ltd.); and the like.

Among these, in terms of reduced yellowing, aliphatic diisocyanates such as hexamethylene diisocyanate, trimethylhexamethylene diisocyanate, and lysine diisocyanate; and alicyclic diisocyanates such as hydrogenated diphenylmethane diisocyanate, hydrogenated xylylene diisocyanate, isophorone diisocyanate, norbornene diisocyanate, and 1,3-bis(isocyanatomethyl)cyclohexane, are preferably used; particularly preferably, in terms of reduced curing shrinkage, isophorone diisocyanate, hydrogenated diphenylmethane diisocyanate, and hydrogenated xylylene diisocyanate are used; more preferably, in terms of excellent reactivity and versatility, isophorone diisocyanate is used.

<Polyol compound (b4)>

Examples of the polyol compound (b4) include polyether polyols, polyester polyols, polycarbonate polyols, polyolefin polyols, polybutadiene polyols, (meth)acrylic polyols, polysiloxane polyols, as well as alkylene glycols such as ethylene glycol, propylene glycol, and neopentyl glycol.

Examples of the polyether polyol include alkylene structure-containing polyether polyols such as polyethylene glycol, polypropylene glycol, polytetramethylene glycol, polybutylene glycol, and polyhexamethylene glycol, and random or block copolymers of these polyalkylene glycols and the like.

Examples of the polyester polyol include condensation polymerization products of a polyhydric alcohol and a polyvalent carboxylic acid; ring-opening polymerization products of cyclic esters (lactones); the reaction products of three components: a polyhydric alcohol, a polyvalent carboxylic acid, and a cyclic ester; and the like.

Examples of the polyhydric alcohol include ethylene glycol, diethylene glycol, propylene glycol, dipropylene glycol, trimethylene glycol, 1,4-tetramethylene diol, 1,3-tetramethylene diol, 2-methyl-1,3-trimethylene diol, 1,5-pentamethylene diol, neopentyl glycol, 1,6-hexamethylene diol, 3-methyl-1,5-pentamethylene diol, 2,4-diethyl-1,5-pentamethylene diol, glycerin, trimethylol propane, trimethylol ethane, cyclohexane diols (such as 1,4-cyclohexane diol), bisphenols (such as bisphenol A), sugar alcohols (such as xylitol or sorbitol), and the like.

Examples of the polyvalent carboxylic acid include aliphatic dicarboxylic acids such as malonic acid, maleic acid, fumaric acid, succinic acid, glutaric acid, adipic acid, suberic acid, azelaic acid, sebacic acid, and dodecanedioic acid; alicyclic dicarboxylic acids such as 1,4-cyclohexanedicarboxylic acid; aromatic dicarboxylic acids such as terephthalic acid, isophthalic acid, orthophthalic acid, 2,6-naphthalene dicarboxylic acid, paraphenylene dicarboxylic acid, and trimellitic acid; and the like.

Examples of the cyclic ester include propiolactone, $\beta$-methyl-$\delta$-valerolactone, $\epsilon$-caprolactone, and the like.

Examples of the polycarbonate polyol include the reaction products of polyhydric alcohols with phosgene; ring-opening polymerization products of cyclic carbonic acid esters (such as alkylene carbonates), and the like.

Examples of the polyhydric alcohol include polyhydric alcohols such as exemplified in the description of the polyester polyols, and examples of the aforementioned alkylene carbonates include ethylene carbonate, trimethylene carbonate, tetramethylene carbonate, hexamethylene carbonate, and the like.

Note that the polycarbonate polyol may be a compound which has a carbonate bond in the molecule, and has a hydroxyl group at an end, and may have an ester bond together with the carbonate bond.

The aforementioned polyolefin polyols include those having a homopolymer or copolymer of ethylene, propylene, butene or the like as a saturated hydrocarbon backbone, and having a hydroxyl group at an end of the molecule.

The aforementioned polybutadiene polyols include those having a copolymer of butadiene as a hydrocarbon backbone, and having a hydroxyl group at an end of the molecule.

The polybutadiene polyol may be a hydrogenated polybutadiene polyol wherein some or all of the ethylenically unsaturated groups included in the structure may be a hydrogenated.

The aforementioned (meth)acrylic polyols include those having at least two hydroxyl groups in the (meth)acrylic acid ester polymer or copolymer molecules, and examples of these (meth)acrylic acid esters include (meth)acrylic acid alkyl esters such as methyl (meth)acrylate, ethyl (meth)acrylate, propyl (meth)acrylate, butyl (meth)acrylate, hexyl (meth)acrylate, octyl (meth)acrylate, 2-ethylhexyl (meth)acrylate, decyl (meth)acrylate, dodecyl (meth)acrylate and octadecyl (meth)acrylate.

Examples of the polysiloxane polyol include dimethyl polysiloxane polyol, methylphenyl polysiloxane polyol, and the like.

Among these, polyester polyols and polyether polyols are preferred, and in view of their excellent mechanical properties such as flexibility upon curing, polyester polyols are particularly preferred.

The weight average molecular weight of the polyol compound (b4) is preferably 500 to 8000, particularly preferably 550 to 5000, and more preferably 600 to 3000. If the molecular weight of the polyol compound (b4) is too high, mechanical properties such as coating hardness upon curing tend to be lower, if it is too low, there tends to be major curing shrinkage, such that the stability is inferior.

Note that the weight average molecular weight is a weight average molecular weight as converted to standard polystyrene molecular weight, and is measured with high performance liquid chromatography ("Shodex GPC system-11 model" made by Showa Denko K.K.), using a series of three columns: Shodex GPC KF-806L (exclusion limit molecular weight: $2 \times 10^7$, separation range: 100 to $2 \times 10^7$, number of theoretical plates: 10,000 plates/column, packing material: styrene-divinylbenzene copolymer, packing particle size: 10 $\mu$m).

The urethane (meth)acrylate compound (b1) is usually produced by feeding the hydroxyl group-containing (meth)acrylate compound (b2), the polyvalent isocyanate compound (b3) and the polyol compound (b4), together or separately, into a reactor and reacting. Furthermore, it is also possible to react the polyol compound (b4) and the polyvalent isocyanate compound (b3) in advance, and react the hydroxyl group-containing (meth)acrylate compound (b2) with the reaction product obtained to produce the urethane (meth)acrylate compound (b1), this manufacturing method being useful in terms of reaction stability and reducing by-products.

A known reaction means may be used for the reaction of the polyol compound (b4) and the polyvalent isocyanate compound (b3). Here, for example, by causing the molar ratio of the isocyanate groups in the polyvalent isocyanate compound (b3) to the hydroxyl groups in a polyol compound (b4) to be, usually, approximately 2n:(2n-2) (n is an integer, which is 2 or higher), so as to obtain a terminal isocyanate group-containing urethane (meth)acrylate compound on which the isocyanate groups remain, it is then possible to perform an addition reaction with the hydroxyl group-containing (meth)acrylate compound (b2).

Known reaction means can also be used in an addition reaction between a reaction product, obtained by reacting the polyol compound (b4) and the polyvalent isocyanate compound (b3) in advance, and the hydroxyl group-containing (meth)acrylate compound (b2).

In terms of the molar ratio in the reaction between the reaction product and the hydroxyl group-containing (meth)acrylate compound (b2), for example, where there are two isocyanate groups in the polyvalent isocyanate compound (b3) and one hydroxyl group in the hydroxyl group-containing (meth)acrylate compound (b2), the molar ratio for the reaction product to the hydroxyl group-containing (meth)acrylate compound (b2) is approximately 1:2; and where there are three isocyanate groups in the polyvalent isocyanate compound (b3) and one hydroxyl group in the hydroxyl group-containing (meth)acrylate compound (b2), the molar ratio for the reaction product to the hydroxyl group-containing (meth)acrylate compound (b2) is approximately 1:3.

In the addition reaction between the reaction product and the hydroxyl group-containing (meth)acrylate compound (b2), the urethane (meth)acrylate compound (b1) is obtained by terminating the reaction at the point at which the residual isocyanate group content in the reaction system is 0.5 wt% or less.

It is also preferable to use a catalyst in order to promote the reaction, in the reaction of this polyol compound (b4) and the polyvalent isocyanate compound (b3), and in the further reaction of the reaction product thereof and the hydroxyl group-containing (meth)acrylate compound (b2). These catalysts include, for example: organometallic compounds such as dibutyltin dilaurate, trimethyltin hydroxide, and tetra-n-butyltin; metal salts such as zinc octoate, tin octoate, cobalt naphthenate, stannous chloride, and stannic chloride; amine catalysts such as triethylamine, benzyldiethylamine, 1,4-diazabicyclo[2,2,2]octane, 1,8-diazabicyclo[5,4,0]undecene, N,N,N',N'-tetramethyl-1,3-butanediamine, and N-ethylmorpholine; bismuth catalysts such as bismuth nitrate, bismuth bromide, bismuth iodide, and bismuth sulfide, as well as organic bismuth compounds such as dibutyl bismuth dilaurate, dioctyl bismuth dilaurate, as well as organic acid bismuth salts such as bismuth 2-ethylhexanoate, bismuth naphthenate, bismuth isodecanoate, bismuth neodecanoate, bismuth laurate, bismuth maleate, bismuth stearate, bismuth oleate, bismuth linoleate, bismuth acetate, bismuth ribisneodecanoate, bismuth disalicylate and bismuth digallate; and the like. Among these, dibutyl tin dilaurate, and 1,8-diazabicyclo[5,4,0]undecene are preferred.

Furthermore, an organic solvent having no functional groups that react with isocyanate groups, for example, esters such as ethyl acetate and butyl acetate, ketones such as methyl ethyl ketone and methyl isobutyl ketone, and aromatics such as toluene and xylene, can be used in the reaction of the polyol compound (b4) with the polyvalent isocyanate compound (b3), and in the further reaction of the hydroxyl group-containing (meth)acrylate compound (b2) with the reaction product thereof.

The reaction temperature is usually 30 to 90°C, and preferably 40 to 80°C, and the reaction time is usually 2 to 10 hours, and preferably 3 to 8 hours.

With a view to making the most of the property of adhesion to concrete, which is a structural feature of the urethane (meth)acrylate compound (b1) used in the present invention, the urethane (meth)acrylate compound (b1) preferably has 20 or fewer ethylenically unsaturated groups, particularly preferably has 10 or fewer ethylenically unsaturated groups, and more preferably has 5 or fewer ethylenically unsaturated groups. Note that the lower limit for the ethylenically unsaturated groups is usually 2.

The content ratio (ratio by weight) of the binder polymer (A) to the reactive oligomer (B) having one or more unsaturated groups is usually such that the ratio of binder polymer (A) to reactive oligomer (B) is 90:10 to 10:90, preferably 70:30 to 20:80, and particularly preferably 60:40 to 30:70. If there is too little binder polymer (A) (too much reactive oligomer (B)), there is a tendency for the coating layer surface after curing to be tacky, which causes problems in subsequent processing, and for the curing shrinkage of the coating layer to be great, which causes peeling to occur at the ends of the affixed surface and the like, while if there is too much binder polymer (A) (too little reactive oligomer (B)), there is a tendency for the uncured film to be excessively hard such that cracks occur in the film due to handling before bonding, and tracking during bonding tends to be impaired.

<Reactive monomer (C) having one or more unsaturated groups>

As the reactive monomer (C) having one or more unsaturated groups in the present invention, for example, monofunctional monomers, difunctional monomers, trifunctional or higher monomers, and other ethylenically unsaturated monomers can be used.

Monomers containing one ethylenically unsaturated group are used as the monofunctional monomer and examples include, styrene, vinyl toluene, chlorostyrene, $\alpha$-methyl styrene, methyl (meth)acrylate, ethyl (meth)acrylate, acrylonitrile, vinyl acetate, 2-hydroxyethyl (meth)acrylate, 2-hydroxypropyl (meth)acrylate, 2-hydroxybutyl (meth)acrylate, phenoxyethyl (meth)acrylate, 2-phenoxy-2-hydroxypropyl (meth)acrylate, 2-hydroxy-3-phenoxypropyl (meth)acrylate, 3-chloro-2-hydroxypropyl (meth)acrylate, glycerin mono(meth)acrylate, glycidyl (meth)acrylate, lauryl (meth)acrylate, cyclohexyl (meth)acrylate, isobornyl (meth)acrylate, tricyclodecanyl (meth)acrylate, dicyclopentenyl (meth)acrylate, n-butyl (meth)acrylate, hexyl (meth)acrylate, heptyl (meth)acrylate, octyl (meth)acrylate, nonyl (meth)acrylate, decyl (meth)acrylate, isodecyl (meth)acrylate, dodecyl (meth)acrylate, n-stearyl (meth)acrylate, benzyl (meth)acrylate, phenol ethylene oxide-modified (meth)acrylate, nonylphenol propylene oxide-modified (meth)acrylate, half-ester (meth)acrylate derivatives of phthalic acid such as 2-(meth)acryloyloxy-2-hydroxypropyl phthalate, furfuryl (meth)acrylate, carbitol (meth)acrylate, benzyl (meth)acrylate, butoxyethyl (meth)acrylate, allyl (meth)acrylate, acryloyl morpholine, 2-hydroxyethyl acrylamide, N-methylol (meth)acrylamide, N-vinylpyrrolidone, 2-vinylpyridine, 2-(meth)acryloyloxyethyl acid phosphate monoester, and the like.

Monomers that contain two ethylenically unsaturated groups are used as the bifunctional monomer, and examples include ethylene glycol di(meth)acrylate, diethylene glycol di(meth)acrylate, tetraethylene glycol di(meth)acrylate, polyethylene glycol di(meth)acrylate, propylene glycol di(meth)acrylate, dipropylene glycol di(meth)acrylate, polypropylene glycol di(meth)acrylate, butylene glycol di(meth)acrylate, neopentyl glycol di(meth)acrylate, ethylene oxide-modified bisphenol A di(meth)acrylate, propylene oxide-modified bisphenol A di(meth)acrylate, 1,6-hexanediol di(meth)acrylate, 1,6-hexanediol-ethylene oxide-modified di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, phthalic acid diglycidyl ester di(meth)acrylate, hydroxypivalic acid-modified neopentyl glycol di(meth)acrylate, isocyanuric acid ethylene oxide-modified diacrylate, 2-(meth)acryloyloxyethyl acid phosphate diester, and the like.

Monomers that contain three or more ethylenically unsaturated groups are used as the trifunctional or higher monomer, and examples include trimethylolpropane tri(meth)acrylate, pentaerythritol tri(meth)acrylate, pentaerythritol tetra(meth)acrylate, dipentaerythritol tri(meth)acrylate, dipentaerythritol tetra(meth)acrylate, dipentaerythritol penta(meth)acrylate, dipentaerythritol hexa(meth)acrylate, tri(meth)acryloyloxy ethoxy trimethylolpropane, glycerine polyglycidyl ether poly(meth)acrylate, isocyanuric acid ethylene oxide-modified tri(meth)acrylate, ethylene oxide-modified dipentaerythritol penta(meth)acrylate, ethylene oxide-modified dipentaerythritol hexa(meth)acrylate, ethylene oxide-modified pentaerythritol tri(meth)acrylate, ethylene oxide-modified pentaerythritol tetra(meth)acrylate, succinic acid-modified pentaerythritol tri(meth)acrylate and the like.

In addition to that described above, the aforementioned other ethylenically unsaturated monomers include Michael adducts of acrylic acid or 2-acryloyloxyethyl dicarboxylic acid monoesters, the Michael adducts of acrylic acid including acrylic acid dimer, methacrylic acid dimer, acrylic acid trimmer, methacrylic acid trimmer, acrylic acid tetramer, methacrylic acid tetramer, and the like. Examples of the aforementioned 2-acryloyloxyethyl dicarboxylic acid monoester, which is a carboxylic acid having a specific substituent, include 2-acryloyloxyethyl succinate monoester, 2-methacryloyloxyethyl succinate monoester, 2-acryloyloxyethyl phthalate monoester, 2-methacryloyloxyethyl phthalate monoester, 2-acryloyloxyethyl hexahydrophthalic acid monoester, 2-methacryloyloxyethyl hexahydrophthalic acid monoester, and the like. Further, oligoester acrylates are also included.

Polyfunctional monomers, which are bifunctional monomers and trifunctional or higher monomers, are preferred as the reactive monomer (C) having one or more unsaturated groups in the present invention, and the polyfunctional (meth)acrylate compound (c1) is particularly preferred.

When the total of the non-volatile components of the binder polymer (A) component and the reactive oligomer (B) component is 100 parts by weight, the content of the reactive monomer (C) in the curable resin composition is preferably 1 to 100 parts by weight, particularly preferably 3 to 80 parts by weight, and more preferably 5 to 70 parts by weight.

If the content of the reactive monomer (C) is too low, there is a tendency for degraded flexibility of the coating layer before bonding and for the work characteristics to be significantly degraded, while if it is too high, there is a tendency for the coating layer to become excessively hard, and for lower impact resistance.

<Polymerization initiator (D)>

According to the present invention the polymerization initiator (D) is a thermal polymerization initiator and is an azobis compound having a 10-hour half-life temperature of 50°C or more .

Examples of azobis compounds having a 10-hour half-life temperature of 50°C or more include 2,2'-azobisisobutyronitrile, 1,1'-azobis (cyclohexane-1-carbonitrile), 2,2'-azobis(2-methylbutyronitrile), dimethyl2,2'-azobis(2-methyl propionate), and the like.

Furthermore, as auxiliary agents therefor, combined use can be made of triethanolamine, triisopropanolamine, 4,4'-dimethylamino benzophenone (Michler's ketone), 4,4'-diethylaminobenzophenone, 2-dimethylaminoethylbenzoic acid, ethyl 4-dimethylaminobenzoate, (n-butoxy)ethyl 4-dimethylaminobenzoate, isoamyl 4-dimethylaminobenzoate, 2-ethylhexyl 4-dimethylaminobenzoate, 2,4-diethyl thioxanthone, 2,4-diisopropyl thioxanthone, and the like.

When the total of the non-volatile components of the binder polymer (A) component, the reactive oligomer (B) component and the reactive monomer (C) component is 100 parts by weight, the content of the polymerization initiator (D) in the curable resin composition is preferably 0.1 to 30 parts by weight, particularly preferably 0.5 to 20 parts by weight, and more preferably 1 to 10 parts by weight.

If the content of the polymerization initiator (D) is too low, there is a tendency for curing of the coating layer to be insufficient, for insufficient elasticity or hardness to be obtained, and for the film to be brittle an unable to fulfill its function, while if the content is too great, the polymerization initiator (D) will bleed out during storage, prior to the reaction of the film, and crystals tend to be deposited in the coating layer.

<Filler (E)>

The curable resin composition in the laminated film for forming a concrete surface coating layer of the present invention may comprise a filler (E). By including the filler (E) in the curable resin composition, effects can be produced such as improving filling characteristics, limiting contraction upon curing, and improving smoothness.

Examples of the filler (E) in the present invention include inorganic fillers and organic fillers.

Inorganic fillers include talc, clay, silicon dioxide, silicic acid, diatomaceous earth, kaolin, mica, asbestos, gypsum, graphite, glass balloons, glass beads, calcium sulfate, barium sulfate, ammonium sulfate, calcium sulfite, calcium carbonate, calcium oxide, sodium bicarbonate, sodium carbonate, calcium carbonate whiskers, magnesium carbonate, magnesium oxide, dawsonite, dolomite, titanium oxide, potassium titanate, carbon black, processed mineral and glass fibers such as glass fiber, alumina fiber, boron fiber, natural mica, tobermorite, carbon fiber, hollow carbon spheres, bentonite, montmorillonite, copper powder, sodium sulfate, potassium sulfate, zinc sulfate, copper sulfate, iron sulfate, magnesium sulfate, aluminum sulfate, potassium aluminum sulfate, ammonium nitrate, sodium nitrate, potassium nitrate, aluminum nitrate, ammonium chloride, sodium chloride, potassium chloride, magnesium chloride, calcium chloride, sodium phosphate, potassium chromate, and calcium citrate.

Specific examples of the organic filler include starch, melamine resins such as melamine-formaldehyde resins, crosslinked acrylic powders, copolymers of acrylic estermethacrylic acid ester, polymethyl (meth)acrylate resin, and polystyrene resin, as well as biodegradable resins such as polylactic acid.

From among these, powdered calcium carbonate is preferred from the point of view of compatibility with autoclaved lightweight concrete (ALC).

The filler (E) is preferably in granules or fibers having an average particle size of 0.1 to 20 $\mu$m, particularly preferably granules or fibers having an average particle size of 0.1 to 15 $\mu$m, and more preferably granules or fibers having an average particle size of 1 to 10 $\mu$m. If the average particle size is too small, there is a tendency for this to be disadvantageous in terms of cost, and if this is too large, there is a tendency for this to cause pinholes in the coating layer, and to degrade the appearance.

"Average particle size" as used here refers to the average value of the particle diameters upon integration (upon measurement) (median diameter), which can be measured with a laser diffraction particle size distribution measurement device ("SALD-2000J," made by Shimadzu Corporation).

When the total of the non-volatile components of the binder polymer (A) component and the reactive oligomer (B) component is 100 parts by weight, the content of the filler (E) in the curable resin composition is preferably 1 to 1000 parts by weight, particularly preferably 5 to 500 parts by weight, and more preferably 10 to 200 parts by weight.

If the content of the filler (E) is too low, the contraction and fluidity of the resin will be too great, such that it tends to be difficult to produce the desired smoothness, while if the content is too great, there is a tendency for the uncured film to be brittle, for the bonding characteristics to be lower, and for the cured film to be fragile, such that resin and filler fall off from the surface.

Hereafter, a curable resin composition substantially not comprising the filler (E) will be specifically referred to as the curable resin composition [i], and a curable resin composition comprising the filler (E) will be specifically referred to as the curable resin composition [ii].

Note that, the content of filler (E) in the curable resin composition [i] substantially not comprising the filler (E) is preferably 5 wt% or less, particularly preferably 3 wt% or less, and more preferably 1 wt% or less. It is especially preferable that this contain no filler (E) whatsoever.

<Foaming agent (F)>

The curable resin composition [ii] in the laminated film for forming a concrete surface coating layer of the present invention preferably further comprises a foaming agent (F). Including a foaming agent (F) in the curable resin composition [ii] improves the filling characteristics of the laminated film for forming a concrete surface coating layer, in terms of larger irregularities in the surface of the concrete. For example, with concrete substrates, and particularly substrates having large deep irregularities in the surface, such as autoclaved lightweight concrete (ALC) board, the laminated film for forming a concrete surface coating layer exhibits sufficient filling characteristics, even for recesses on the millimeter level that are present here and there in the surface, and allows a smooth surface to be formed, even at peripheries including such recesses.

This foaming agent (F) is preferably a thermal decomposition type foaming agent, with which gas is produced as a result of heating and, for example, inorganic compounds and organic compounds can be used, among which inorganic compounds are preferred.

Examples of inorganic compounds include sodium bicarbonate, sodium carbonate and the like, among which, sodium bicarbonate is preferred. Examples of organic compounds include azodicarbonamide/4,4'-oxybis, N,N'-dinitrosopentamethylenetetramine, azodicarbonamide, 4,4'-oxybis(benzenesulfonylhydrazide), N,N'-dinitrosopentamethylenetetramine, azodicarbonamide and the like.

This foaming agent (F) is preferably in granules having an average particle size of 0.1 to 20 pm.

"Average particle size" as used here refers to the average value of the particle diameters upon integration (upon measurement) (median diameter), which can be measured with a laser diffraction particle size distribution measurement device ("SALD-2000J," made by Shimadzu Corporation).

If a foaming agent (F) is further included in the curable resin composition [ii], when the total of the non-volatile components of the binder polymer (A) component and the reactive oligomer (B) component is 100 parts by weight, the content of the foaming agent (F) in the curable resin composition [ii] is preferably 0.1 to 50 parts by weight, particularly preferably 0.2 to 20 parts by weight and more preferably 0.5 to 10 parts by weight.

If the content of the foaming agent (F) is too great, there will be a tendency for the porosity to dramatically increase, such that the strength of the heat cured layer is lowered, and thus there will be difficulties in maintaining the layer form, while if this is too little, it will tend to be difficult to produce the blending effect of the foaming agent.

Note that, if necessary, known additives such as plasticizers, antioxidants, solvents, surface tension modifiers, stabilizers, chain transfer agents, and surfactants may be further blended with the curable resin compositions [i] or [ii] of the present invention.

Laminated film for forming a concrete surface coating layer

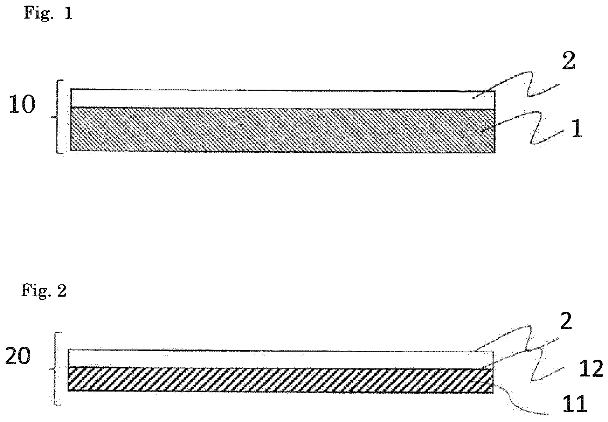

The laminated film for forming a concrete surface coating layer of the present invention has a structure in which a layer comprising a curable resin composition (hereafter referred to as a curable resin composition layer) and a support film are laminated. FIG. 1 is a sectional view schematically illustrating one example of the laminated film for forming a concrete surface coating layer of the present invention. In the drawing, (1) is the curable resin composition layer, (2) is the support film, and (10) is the laminated film for forming a concrete surface coating layer of the present invention. The laminated film for forming a concrete surface coating layer of the present invention may have a protective film laminated on the curable resin composition layer, on the opposite side to the support film.

For example, polyethylene terephthalate (PET) film, polypropylene film, polyethylene film, polyethylene naphthalate film, polyvinyl alcohol film, ethylene-vinyl alcohol copolymer film or the like, or paper having a resin layer laminated to its surface are preferably used as the support film.

Among these, the use of PET film or paper having a resin layer laminated to its surface is particularly preferred from the point of view of heat resistance during film formation and during curing of the coating.

The thickness of the support film is preferably 5 μm or more, particularly preferably 10 to 100 μm, and more preferably 20 to 50 μm.

Further, a pattern may be provided on the surface of this support film, for purposes of design, and this pattern may be transferred to the curable resin composition layer that coats the surface of the concrete after curing.

The protective film is used for purposes such as preventing the transfer of the adhesive curable resin composition layer to the support film, when the laminated film for forming a concrete surface coating layer is rolled. Examples of the protective film include polyethylene film, PET film, polypropylene film, polyvinyl alcohol film, ethylene-vinyl alcohol copolymer film, polytetrafluoroethylene film, nylon film, release paper and the like, among which, polyolefin films such as polyethylene film and polypropylene film are preferred.

The thickness of the protective film is preferably 5 μm or more, particularly 10 to 100 μm, and more preferably 15 to 50 μm.

The laminated film for forming a concrete surface coating layer of the present invention may be a laminated film resulting from laminating the support film, a layer comprising the curable resin composition [ii] comprising the filler (E), and a layer comprising the curable resin composition [i] substantially not comprising the filler (E), in a layer configuration in this order.

FIG. 2 is a sectional view schematically illustrating another example of the laminated film for forming a concrete surface coating layer of the present invention. In the figure, (11) is a layer comprising the curable resin composition [i] substantially not comprising the filler (E); (12) is a layer comprising the curable resin composition [ii] comprising the filler (E); (2) is the support film; and (20) is the laminated film for forming a concrete surface coating layer of the present invention.

Note that the layer comprising the curable resin composition [ii] comprising the filler (E) may further comprise the foaming agent (F).

Examples of the method for manufacturing the laminated film for forming a concrete surface coating layer (10) of the present invention shown in FIG. 1 include a method wherein the curable resin composition is uniformly applied to one side of the support film (2) and dried, normally for 5 to 60 minutes, in an oven, normally at 50 to 120°C, or with a gradually increasing temperature, so as to form the curable resin composition layer (1). Furthermore, if a protective film is used, a method can be cited in which the curable resin composition layer (1) is formed and then the protective film is pressure laminated on the top face of this layer.

Furthermore, examples of the method for manufacturing the laminated film for forming a concrete surface coating layer (20) of the present invention shown in FIG. 2 include a method wherein the curable resin composition [ii] is uniformly applied to one side of the support film (2) and dried, normally for 5 to 60 minutes, in an oven, normally at 50 to 120°C, or with a gradually increasing temperature, so as to form the curable resin composition layer (12); further, the curable resin composition [i] is likewise uniformly applied on the top face of the curable resin composition layer (12) and dried, normally for 5 to 60 minutes, in an oven, normally at 50 to 120°C, or with a gradually increasing temperature, so as to form the curable resin composition layer (11).

Furthermore, mention can also be made of a method of laminating: a product wherein the curable resin composition [ii] is uniformly applied to one side of the support film (2) and dried, normally for 5 to 60 minutes, in an oven, normally at 50 to 120°C, or with a gradually increasing temperature, so as to form the curable resin composition layer (12); and a product wherein the curable resin composition [i] is uniformly applied to one side of the protective film and dried, normally for 5 to 60 minutes, in an oven, normally at 50 to 120°C, or with a gradually increasing temperature, so as to form the curable resin composition layer (11).

The concentration of the filler (E) in the layer (12) comprising the curable resin composition [ii] in the laminated film for forming a concrete surface coating layer (20) of the present invention shown in FIG. 2 is preferably gradated so that the concentration is higher toward the support film (2) than toward the opposite side, in the thickness direction.

Examples of the method for gradating, in the thickness direction, the concentration of the filler (E) in the curable resin composition layer (12) in this manner include a method wherein a plurality of curable resin compositions [ii] having differing concentrations of the filler (E) are prepared, and layers are successively formed starting with the curable resin composition [ii] having the highest concentration, so as to form multiple layers of curable resin composition layers (12) in which the concentration is higher toward the support film (2) than toward the opposite side.

Furthermore, if the protective film is used, a method can be cited in which the curable resin composition layer (11) or (12) is formed and then the protective film is pressure laminated on the top face of the layer (11) or (12).

In the laminated film for forming a concrete surface coating layer of the present invention, the thickness of the curable resin composition layer is 30 $\mu$m or more, particularly preferably 50 to 500 $\mu$m, more preferably 80 to 400 $\mu$m, and especially preferably 100 to 300 $\mu$m.

Furthermore, particularly in cases where the curable resin composition layer is a single layer, the thickness of the curable resin composition layer is preferably 80 $\mu$m or more, particularly preferably 100 to 500 $\mu$m, and more preferably 150 to 300 $\mu$m.

In the laminated film for forming a concrete surface coating layer of the present invention, in cases where the coating layer resulting from curing the curable resin composition layer is to be endowed with design characteristics, the thickness of the curable resin composition layer is preferably 150 $\mu$m or more, particularly preferably 150 to 500 $\mu$m, and more preferably 250 to 300 $\mu$+m.

Further, in the laminated film for forming a concrete surface coating layer (20) of the present invention shown in FIG. 2, the thickness of the layer (11) comprising the curable resin composition [i] is 30 $\mu$m or more, particularly 50 to 500 $\mu$m, more preferably 80 to 400 $\mu$m, and especially preferably 100 to 300 $\mu$m, while the thickness of the layer (12) comprising the curable resin composition [ii] is preferably 50 $\mu$m or more, particularly preferably 100 to 500 $\mu$m, and more preferably 150 to 300 $\mu$m.

In the laminated film for forming a concrete surface coating layer (20) of the present invention shown in FIG. 2, in cases where the coating layer resulting from curing the curable resin composition layer (11) is to be endowed with design characteristics, the total thickness of the curable resin composition layers (11) and (12) is preferably 150 $\mu$m or more, particularly preferably 150 to 500 $\mu$m, and more preferably 250 to 300 $\mu$m.

If the thickness of curable resin composition layer is too low, the number of laminations necessary to achieve a suitable thickness for mechanically protecting the surface of the concrete will be too great, such that there will be a tendency for the lamination process to be complicated, and for the cost to be excessively high, or there will be a tendency to difficulties in limiting damage to the surface of the concrete because a suitable thickness for protection is not produced. Furthermore, if this thickness is too great, the coating layer will tend to readily peel from the surface of the concrete, and costs will tend to be excessively high.

The laminated film for forming a concrete surface coating layer of the present invention obtained in this manner can suitably be used for forming a coating layer that coats the surface of concrete, and particularly for forming a coating layer that coats the surface of an autoclaved lightweight concrete (ALC) board.

The surface characteristics of autoclaved lightweight concrete (ALC) boards differ with each maker or each lot, and while coating may be performed on an untreated surface thereof, it is also possible to perform coating after grinding the surface using sandpaper or the like and exposing the foamed portion at the interior.

Concrete building material

The concrete building material of the present invention comprises concrete and a concrete surface coating layer that coats the surface of the concrete, and the concrete surface coating layer can be formed by curing a layer comprising the curable resin composition in the laminated film for forming a concrete surface coating layer of the present invention.

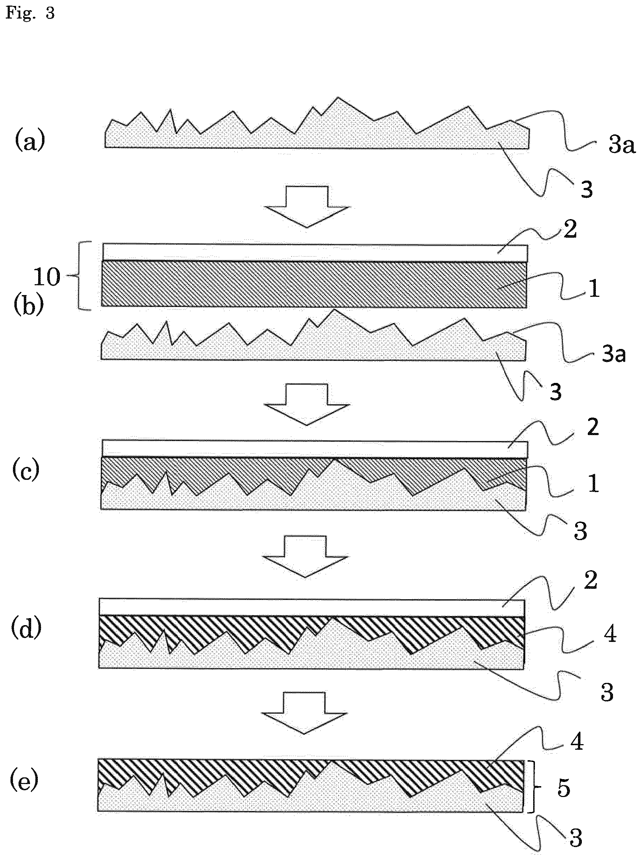

FIG. 3 is a sectional view schematically illustrating a process of forming coating layers on the surface of concrete using the laminated film for forming a concrete surface coating layer of the present invention shown in FIG. 1. The laminated film for forming a concrete surface coating layer (10) of the present invention shown in FIG. 3 (b), in which the curable resin composition layer (1) and the support film (2) are laminated, is laminated on a surface (3a) of the concrete (3) shown in FIG. 3 (a), and the curable resin composition layer (1) is fused and bonded as shown in FIG. 3 (c). By curing the curable resin composition layer (1), a coating layer (4), which is the cured product, is formed on the surface (3a) of the concrete (3), as shown in FIG. 3 (d). Furthermore, the support film (2) may be peeled off from the coating layer (4) as shown in FIG. 2 (e), as necessary. As a result of the foregoing process, a concrete building material (5) is obtained, wherein the coating layer (4) is formed on the concrete (3).

Next, description is provided of a method for forming a coating layer on a concrete surface, using at least the curable resin composition layer (12) specifically comprising the filler (E) in the curable resin composition layer (see FIG. 2).

Note that, in the following methods for forming a coating layer (b) and (c), examples of methods for laminating the curable resin composition layer (11) include using a laminated film in which the support film and the curable resin composition layer (11) are laminated, and after laminating said laminated film on a concrete surface, peeling off the support film.

<Method for forming a coating layer (a)>

A method for forming a coating layer in which a coating layer is formed on a concrete surface, comprising:

laminating a laminated film for forming a concrete surface coating layer (20), wherein the support film and the layer (12) comprising the curable resin composition
[ii] comprising the filler (E) are laminated, on the concrete surface so as to bring the curable resin composition layer (12) into contact with the concrete surface; and curing the curable resin composition layer (12), thereby forming a coating layer on the concrete surface.

<Method for forming a coating layer (b)>

A method for forming a coating layer in which a coating layer is formed on a concrete surface, comprising: laminating the layer (11) comprising a curable resin composition [i] substantially not comprising the filler (E) on the concrete surface; laminating the layer (12) comprising the curable resin composition [ii] comprising the filler (E) thereon; and curing the curable resin composition layer (11) and the curable resin composition layer (12), thereby forming a coating layer on the concrete surface.

<Method for forming a coating layer (c)>

A method for forming a coating layer in which a coating layer is formed on a concrete surface, comprising: laminating and curing a layer (11) comprising a curable resin composition [i] substantially not comprising the filler (E) on the concrete surface; and laminating and curing the layer (12) comprising the curable resin composition [ii] comprising the filler (E) thereon, thereby forming a coating layer on the concrete surface.

<Method for forming a coating layer (d)>

This method for forming a coating layer (d) can be performed, for example, using the laminated film for forming a concrete surface coating layer (20) of the present invention shown in FIG. 2.

A method for forming a coating layer in which a coating layer is formed on a concrete surface, comprising: laminating, on the concrete surface, a laminated film for forming a concrete surface coating layer resulting from laminating a support film (2), a layer (12) comprising a curable resin composition [ii] comprising the filler (E) and a layer (11) comprising a curable resin composition [i] substantially not comprising the filler (E), so as to bring the curable resin composition layer (11) into contact with the concrete surface; and curing the curable resin composition layer (11) and the curable resin composition layer (12), thereby forming a coating layer on the concrete surface.

The process for forming a coating layer on the surface of an autoclaved lightweight concrete (ALC) board using the laminated film for forming a concrete surface coating layer of the present invention will be described. Note that, in the following, the laminated film for forming a concrete surface coating layer is also referred to simply as the laminated film.

<Lamination (bonding)>

The laminated film of the present invention may be laminated on the autoclaved lightweight concrete (ALC) board by simply placing it directly thereon, or lamination may be performed by bonding the laminated film of the present invention. In particular, it is preferable that the laminated film of the present invention be bonded after preheating or drying the autoclaved lightweight concrete (ALC) board in advance.

When bonding, the bonding may be performed, for example, by pressing the laminated film of the present invention onto the autoclaved lightweight concrete (ALC) board with a roller heated to a surface temperature of 70°C or more (hereinafter, also referred to as a hot roller). Note that, if the laminated film for forming a concrete surface coating layer has a protective film, bonding is performed so as to bring the curable resin composition layer into contact with the autoclaved lightweight concrete (ALC) board while the protective film is being peeled off, or after the protective film has been peeled off.

The roller temperature at this time is preferably 80°C or more, particularly preferably 100°C to 180°C, and more preferably 130°C to 160°C. If the roller temperature is too low, the curable resin composition layer of the laminated film for forming a concrete surface coating layer will not sufficiently soften and fuse, and thus will be less likely to sufficiently permeate into the surface of the autoclaved lightweight concrete (ALC) board, and this tends to cause separation of the curable resin composition layer after curing. If the roller temperature is too high, melting of the curable resin composition layer proceeds excessively, such that the viscosity drops and there is a tendency for the autoclaved lightweight concrete (ALC) board to be completely permeated such that no resin remains for coating the surface, and if the curable resin composition contains a thermal polymerization initiator, curing of the curable resin composition will progress in the laminate, such that sufficient permeation is not achieved, which tends to result in the curable resin composition layer separating.

The weighted linear pressure of the hot roller when pressing the laminated film is preferably 0.1 to 100 kg/cm, particularly preferably 0.3 to 50 kg/cm, and more preferably 0.5 to 25 kg/cm. Furthermore, the travel speed of the hot roller with respect to the laminated film is preferably 0.01 to 20 m/min., particularly preferably 0.1 to 15 m/min., and more preferably 0.2 to 10 m/min.

If the weighted linear pressure of the hot roller is too low or the travel speed of the hot roller is too high, the curable resin composition layer of the laminated film is unlikely to sufficiently permeate the surface of the autoclaved lightweight concrete (ALC) board, and this tends to cause separation of the curable resin composition layer after curing. Furthermore, if the weighted linear pressure of the hot roller is too high or the travel speed of the hot roller is too low, the curable resin composition layer tends to completely permeate into the autoclaved lightweight concrete (ALC) board, such that no resin remains for coating the surface.

Note that rollers used during bonding are not limited to the hot roller described above, and unheated (which is to say, ambient temperature) rollers can also be used.

Furthermore, the curable resin composition layer of this laminated film for forming a concrete surface coating layer can be laminated so that the curable resin composition layer of the laminated film for forming a concrete surface coating layer that has been bonded is thick and produces a desired surface shape and desired surface properties.

For example, the support film on a first laminated film for forming a concrete surface coating layer that has been bonded as described above may be peeled off and, on the exposed first curable resin composition layer, a second laminated film for forming a concrete surface coating layer may likewise be bonded, so as to laminate the first curable resin composition layer and the second curable resin composition layer.

Furthermore, the first curable resin composition layer and the second curable resin composition layer can also be lamination-bonded in advance so as to form a thick curable resin composition layer and this can be bonded on the surface of the autoclaved lightweight concrete (ALC) board in the same manner as described above.

Forming the concrete surface coating layer

Forming of the coating layer on the surface of the concrete using the laminated film for forming a concrete surface coating layer of the present invention can be done by performing the lamination (bonding) described above, whereby the laminated film for forming a concrete surface coating layer is laminated on the concrete so as to bring the curable resin composition layer into contact with the concrete surface, whereupon the curable resin composition layer is cured. Examples of the method for curing the curable resin composition layer according to the present invention, where the curable resin composition layer comprises an azobis compound having a 10-hour half-life temperature of 50°C or more as thermal polymerization initiator (D), include the following first, second, third and fourth methods.

*First method: Hot roller method*

The first method is a method in which the laminated film for forming a concrete surface coating layer is pressed onto the concrete surface with a hot roller and the curable resin composition layer is cured. The hot roller is preferably arranged above the laminated film and pressed against the concrete surface with the laminated film therebetween.

In terms of hot rollers, a single-roller mill, having one roller, can be used, or a continuous roller mill or the like can be used, in which multiple rollers are arranged in a direction that intersects the roller axes. The multiple rollers in the continuous roller mill are preferably arranged so that the surface temperatures thereof are set progressively higher, so as to progressively increase the amount of heat applied to the laminated film. Note that examples of the material from which the rollers are made include metal and rubber, and from the viewpoint of easy temperature control, metal is preferred. Furthermore, the number of rollers in the continuous roller mill is normally 2 to 10, preferably 3 to 8, and particularly preferably 4 to 6.

Hot rollers that can be used include smooth rollers, the outer circumferential faces of which are smooth, and embossing rollers and the like, in which protrusions and recesses are formed on the outer circumferential faces, and the use of embossing rollers is preferred in that it is possible to endow the coating layer with design characteristics by forming protrusions and recesses in the coating layer. The depth of the recesses in the embossing roller is, for example, 0.001 to 1 mm, and preferably 0.005 to 0.5 mm.

The surface temperature of the hot roller when pressing it against the concrete surface with the laminated film therebetween is preferably 70°C or more, particularly preferably 100°C to 180°C, and more preferably 130°C to 160°C. If the surface temperature of the hot roller is too low, curing of the curable resin composition layer will be insufficient, and this tends to cause separation of the curable resin composition layer after curing.

The linear pressure on the hot roller when pressing it against the concrete surface with the laminated film therebetween is preferably 0.01 to 10 kg/cm, particularly preferably 0.05 to 5 kg/cm, and more preferably 0.1 to 2 kg/cm. Furthermore, the travel speed of the hot roller with respect to the laminated film is preferably 0.01 to 20 m/min., particularly preferably 0.05 to 15 m/min., and more preferably 0.1 to 10 m/min.

If the linear pressure on the hot roller is too low, or the travel speed of the hot roller is too high, curing of the curable resin composition layer will be insufficient, and this tends to cause separation of the curable resin composition layer after curing. Furthermore, if the linear pressure of the hot roller is too high or the travel speed of the hot roller is too low, the curable resin composition layer tends to completely permeate into the concrete such as autoclaved lightweight concrete (ALC) board, such that no resin remains for coating the surface.

*Second method: Hot plate method*

The second method is a method in which the laminated film for forming a concrete surface coating layer is pressed onto the concrete surface with a hot plate and the curable resin composition layer is cured. The hot plate is preferably arranged above the laminated film and pressed against the concrete surface with the laminated film therebetween.

Hot plates that can be used include flat plates, in which the surface that makes contact with the laminated film is smooth, and embossing plates and the like, in which protrusions and recesses are formed on the surface that makes contact with the laminated film. The use of embossing plates is preferred, in that it is possible to endow the coating layer with design characteristics by forming protrusions and recesses in the coating layer. The depth of the recesses in the embossing plate is, for example, 0.001 to 1 mm, and preferably 0.005 to 0.5 mm.

The surface temperature of the hot plate when pressing it against the concrete surface with the laminated film therebetween is preferably 70°C or more, particularly preferably 100°C to 180°C, and more preferably 130°C to 160°C. If the surface temperature of the hot plate is too low, curing of the curable resin composition layer will be insufficient, and this tends to cause separation of the curable resin composition layer after curing.

The pressure on the hot plate when pressing it against the concrete surface with the laminated film therebetween is preferably 0.5 to 500 kgf/cm$^2$, particularly preferably 1 to 100 kgf/m$^2$, and more preferably 2 to 80 kgf/m$^2$. The pressing time is preferably for 1 to 120 minutes, particularly preferably for 3 to 60 minutes, and more preferably for 5 to 30 minutes.

If the pressure on the hot plate is too low, or the pressing time is too short, curing of the curable resin composition layer will be insufficient, and this tends to cause separation of the curable resin composition layer after curing. Furthermore, if the pressure on the hot plate is too high, or the pressing time is too long, the curable resin composition layer tends to completely permeate into the concrete such as autoclaved lightweight concrete (ALC) board, such that no resin remains for coating the surface.

*Third method: Hot atmosphere method*

The third method is a method in which the coating layer is formed on the concrete surface by curing the curable resin composition layer in a hot atmosphere. The atmosphere temperature is 70°C or more, particularly preferably 100°C to 180°C, and more preferably 130°C to 160°C. Methods for curing the curable resin composition layer in a hot atmosphere include a method wherein the laminated film for forming a concrete surface coating layer is left in a thermostatic chamber adjusted to the aforementioned atmosphere temperature, and a method in which the laminated film for forming a concrete surface coating layer is moved within an atmospheric furnace adjusted to the aforementioned atmosphere temperature.
This third method may be combined with the first method or the second method.
Furthermore, the hot roller used in the first method or the hot plate used in the second method may be changed to a roller, embossing roller, flat plate or embossing plate, the surface temperature of which does not satisfy the aforementioned temperatures, and the third method may be performed while pressing the laminated film for forming a concrete surface coating layer against the concrete surface, or after pressing the laminated film for forming a concrete surface coating layer against the concrete surface.

*Fourth method: Package method*

The fourth method is a method in which, after bringing the curable resin composition layer of the laminated film for forming a concrete surface coating layer into contact with the concrete surface, this is placed in a bag made from a monolayer film or a multilayer film and the temperature of the atmosphere around the package, which has been vacuum sealed, is brought to 90°C or more, thereby forming the coating layer on the concrete surface.

The bag made from a monolayer film or a multilayer film

The bag into which the laminate of the concrete and the laminated film for forming a concrete surface coating layer is placed is made from a monolayer film or a multilayer film.
A thermoplastic resin film can be used for the film that constitutes the monolayer film or the multilayer film, and examples include polyolefin film, polyester film, polyamide film, polyurethane film, polyvinyl alcohol film, polycarbonate film, polystyrene film, polyacrylonitrile film, ethylene-vinyl acetate copolymer film, ethylene-vinyl alcohol copolymer film, ethylene-methacrylic acid copolymer film, and the like.
Examples of the resin constituting the polyolefin film include homopolymers, such as polypropylene, polybutene-1, high density polyethylene, medium density polyethylene, low density polyethylene, and linear short chain branched polyethylene (LLDPE); as well as polymers, having propylene as the main component, that are copolymerized with ethylene, butene-1, pentene-1,4-methylpentene-1, hexene-1, octene-1,5-ethylidene-2-norbornene, 5-methylene-2-norbornene, 1,4-hexadiene, styrene and the like, or that are graft-modified with carboxylic acids such as maleic anhydride; as well as polymers, having butene-1 as the main component, that are copolymerized with ethylene, propylene, butene-2, isobutylene, butadiene, pentene-1, 4-methylpentene-1, hexene-1, octene-1 and the like, or that are graft-modified with carboxylic acids such as maleic anhydride; as well as polymers, having ethylene as the main component, that are copolymerized with propylene, butene-1,4-methylpentene-1,1-hexene, 1-octene, 5-ethylidene-2-norbornene, 5-methylene-2-norbornene, styrene, vinyl acetate, methyl acrylate, ethyl acrylate, acrylic acid, methyl methacrylate, ethyl methacrylate, methacrylic acid, glycidyl methacrylate and the like, or that are graft-modified with carboxylic acids such as maleic anhydride; and the like.
From among the aforementioned copolymers, copolymers of acrylic acid and methacrylic acid may be cross-linked with sodium, zinc, aluminum and the like, and in copolymers of vinyl acetate, some or all of the vinyl acetate component may be saponified. Furthermore, polyethylene may also be graft-modified with carboxylic acids such as maleic anhydride.
Among the polyolefin films, polypropylene film, polyvinyl chloride film, polyvinylidene chloride film and fluorine-based films are preferred.
Resins constituting polyester films comprise an acid component and a glycol component.
Examples of this acid component include: terephthalic acid, oxalic acid, isophthalic acid, phthalic acid, 2,6-naphthalenedicarboxylic acid, 5-sodium sulfoisophthalic acid, succinic acid, adipic acid, azelaic acid, sebacic acid, dodecanedioic acid, dimer acids, maleic anhydride, maleic acid, fumaric acid, itaconic acid, citraconic acid, mesaconic acid, dicarboxylic acids such as cyclohexanedicarboxylic acid, 4-hydroxybenzoic acid, $\varepsilon$-caprolactone, and oxycarboxylic acids such as lactic acid.

Examples of this glycol component include glycols such as ethylene glycol, 1,3-propanediol, 1,4-butanediol, neopentyl glycol, 1,6-hexanediol, cyclohexane dimethanol, triethylene glycol, polyethylene glycol, polypropylene glycol, polytetramethylene glycol, and the like.

Polyester resins are produced by copolymerizing the aforementioned acid (component) and glycol (component). There are no particular restrictions on the combination of the two components, and polymers resulting from copolymerization of any combination can be used, but among these it is preferable to use polyethylene terephthalate, polyethylene naphthalate, or polycyclohexylene dimethylene terephthalate as the polyester, and use of polyethylene terephthalate is more particularly preferred.

The monolayer film or multilayer film used in the present invention may result from mixing two or more thermoplastic resins. Furthermore, the monolayer film or multilayer film used in the present invention may suitably comprise ultraviolet absorbing agents, antioxidants, antistatic agents, surfactants, pigments, fluorescent whitening agents or the like, as well as inorganic particles such as silica, calcium carbonate, titanium oxide, and organic particles having acrylic acid, styrene and the like as constituent components, as necessary. Further, the monolayer film or the multilayer film used in the present invention has preferably undergone stretch processing, and use of, for example, a monoaxially stretched film or a biaxially stretched film is preferred.

The multilayer film used in the present invention may have a structure in which two or more thermoplastic resin layers have been laminated, and a vapor deposition layer or an adhesive layer may be present between the thermoplastic resin layers.

In terms of metals or metal oxides that can be used in the vapor deposition layer, for example, metals such as aluminum, gold, silver, copper, nickel, cobalt, chromium, tin and the like, and metal oxides thereof can be used. Among these, the use of aluminum, gold, silver and tin is preferred, and the use of aluminum is particularly preferred in terms of cost. The thickness of this vapor deposition layer is normally 50 to 1000 Å, and particularly preferably 200 to 1000 Å. In terms of vapor deposition methods for the metal or metal oxide, for example, ordinary vacuum vapor deposition methods such as sputtering, ion plating, resistance heating vapor deposition, high-frequency induction heating vapor deposition, and electron beam heating vapor deposition can be used. Examples of the adhesive in the adhesive layer include organotitanium compounds, isocyanate compounds, polyester-based compounds and the like.

Known methods can be used for manufacturing the monolayer film or multilayer film used in the present invention, for example, films can be made with a flow casting method, in which a film is formed by flow casting a solution of a thermoplastic resin on a metal surface such as that of a drum or an endless belt, or a melt process, in which melt extrusion is performed with an extruder.

The thickness of the monolayer film used in the present invention is normally 5 to 200 $\mu$m, and particularly preferably 10 to 100 $\mu$m. Furthermore, the thickness of the multilayer film is normally 5 to 200 $\mu$m, and particularly preferably 10 to 100 $\mu$m. If the thickness is too thin, there is a tendency for tears and the like to occur readily during processing, and conversely if this is to thick, there is a tendency not only for inferior work characteristics, but also for this to be uneconomical.

When forming the bag from the monolayer film or the multilayer film, it is preferable to provide a sealing layer on the side that will be the inside of the bag. A polyolefin resin layer is preferred for the sealing layer, from the point of view of seal strength, and among polyolefin resins, polypropylene, high density polyethylene, low density polyethylene, ethylene-vinyl acetate resin and the like are preferably used. The sealing layer may also be made from the aforementioned resins as a separate film, and laminated by way of bonding, using an adhesive or the like on the side of the film that will be the inside of the bag, or may be laminated by direct extrusion onto the side that will be the inside of the bag. If the sealing layer is laminated as a film, lamination in the form of an unstretched film is advantageous in terms of achieving good seal characteristics. The thickness of the sealing layer is normally 10 to 100 $\mu$m, and particularly preferably 20 to 80 $\mu$m.

A package is produced by placing the laminate of the concrete and the laminated film for forming a concrete surface coating layer in the bag made from the monolayer film or the multilayer film, producing a vacuum, and sealing and closing the opening of the bag, so as to seal it tightly. The vacuum within the package is preferably 100 Pa or less, more preferably 10 Pa or less, and particularly preferably 5 Pa or less.

When the laminate of the concrete and the laminated film for forming a concrete surface coating layer is placed in the bag made from the monolayer film or the multilayer film, the laminate may be placed directly in the bag, or may be placed in the bag, with a flat plate placed on top of the laminated film in the laminate, wherein the surface of the plate that makes contact with the laminated film is smooth, or with an embossing plate placed on top of the laminated film in the laminate, wherein recesses and protrusions are formed on the surface that makes contact with the laminated film, or the like. The use of an embossing plate is particularly preferred, with a view to endowing the coating layer with design characteristics by forming recesses and protrusions on the coating layer. The depth of the recesses in the embossing plate is, for example, 0.001 to 1 mm, and preferably 0.005 to 0.5 mm.

Note that the following heat treatment or active energy ray irradiation may also be performed with a flat plate, an embossing plate or the like placed on the laminated film side of the package in which the laminate has been placed in the bag.

The temperature of the atmosphere around the package in which the laminate is sealed in the bag is caused to be 90°C or more. The temperature of the atmosphere is preferably 90 to 180°C, particularly preferably 100°C to 180°C, and more preferably 130°C to 160°C. Examples of the method for adjusting the temperature of the atmosphere around the package to this temperature include a method in which the package is placed in a thermostatic chamber that has been adjusted to the aforementioned atmosphere temperature, and a method in which the package is moved in an atmospheric furnace that has been adjusted to the aforementioned atmosphere temperature. The time for which the package is at this atmospheric temperature is preferably for 1 to 120 minutes, particularly preferably for 3 to 60 minutes, and more preferably for 5 to 30 minutes.

By heating the atmosphere around the package in this manner, a thermosetting reaction is brought about in the curable resin composition layer containing the thermal polymerization initiator, resulting in the desired cured coating layer.

End face processing

If unnecessary portions of the laminated film for forming a concrete surface coating layer that has undergone a curing reaction remain after bonding on the autoclaved lightweight concrete (ALC) board, as a result of the resin being squeezed out at the end faces of the board due to the load thereon or the like, these unnecessary portions may be removed by cutting, machining or the like.

Further, areas where the laminated film for forming a concrete surface coating layer has come off in places at the end faces, or areas where this could not be provided during processing, may be supplemented by applying a resin composition that is the same as, or similar to, the curable resin composition used in the present invention, or the binder polymer (A) comprised by the curable resin composition used in the present invention, or a resin similar to this binder polymer (A).

The concrete building material of the present invention can be produced by way of the processes described above.

[Examples]

Hereafter the present invention is described in further detail by way of examples, but so long as the gist thereof is not departed from, the present invention is not limited to the following examples.

Note that, in the examples, "%" and "parts" refer to weight basis.

The following components were prepared.

<Binder Polymer (A)>

(A1): poly(methyl methacrylate) (glass transition temperature: 105°C) ("DIANAL BR-83" made by Mitsubishi Rayon Co., Ltd.)

**<Reactive oligomer (B) having one or more unsaturated groups>**

A reactive oligomer (B1) was prepared as follows. (BI): A 4-necked flask equipped with a thermometer, stirrer, water cooled condenser, and an opening for blowing in nitrogen gas was loaded with 16.1 g (0.07 mol) of isophorone diisocyanate, 75. 2 g (0.04 mol) of a bifunctional polyester polyol (hydroxyl value 54 mg KOH/g), 0.02 g of hydroquinone monomethyl ether, as a polymerization inhibitor, and 0.02 g of dibutyltin dilaurate, as a reaction catalyst, and a reaction was performed for 3 hours at 60°C. Then, 8.6 g (0.07 mol) of 2-hydroxyethyl acrylate was charged, and this was allowed to react for 3 hours at 60°C. The reaction was terminated when the residual isocyanate groups reached 0.3%, resulting in a bifunctional urethane acrylate (B1) (weight average molecular weight: 10,000; viscosity at 60°C: 15,000 mPa ·s).

<Reactive monomer (C) having one or more unsaturated groups>

(C1): methoxypolyethylene glycol methacrylate ("M-90G" made by Shin-Nakamura Chemical Co., Ltd.)
(C2): condensation product of pentaerythritol and acrylic acid ("Viscoat 300", made by Osaka Organic Chemical Industry Ltd., corresponding to a trifunctional or higher monomer.)

<Polymerization initiator (D)>

(D1): 2,2'-azobisisobutyronitrile ("V-60", made by Wako Pure Chemical Industries, Ltd.)
(D2): 1,1'-azobis (cyclohexane-1-carbonitrile) ("V-40", made by Wako Pure Chemical Industries, Ltd.)

<Filler (E)>

(E1): Calcium carbonate ("heavy calcium carbonate powder BF200", made by Shiraishi Calcium Kaisha, Ltd., average particle size: 5 $\mu$m)

Example 1

A resin solution, in which the binder polymer (A1) was diluted to 40% in ethyl acetate, and an oligomer solution, in which the reactive oligomer (B1) was diluted to 70% in 2-butanone, was mixed so that the weight ratio of the non-volatile components of the binder polymer (A1) to the reactive oligomer (B1) was 40:60, whereafter the reactive monomer (C1) was admixed so as to constitute 20 parts with respect to a total of 100 parts of the non-volatile components of the binder polymer (A1) and the reactive oligomer (B1).

Next, the polymerization initiator (D1) was admixed so as to constitute 2 parts with respect to 100 parts of the non-volatile components of the mixture of (A1), (B1) and (C1), to produce a curable resin composition [i-1] solution in which the non-volatile component concentration was 56%.

This curable resin composition [i-1] solution was continuously flow cast on a polyester film [III] having a thickness of 25 $\mu$m, with a comma coater set to a gap width of 0.5 mm, and this was further continuously dried for 12 minutes at 70°C, and for 6 minutes at 90°C, so as to form a curable resin composition layer [I-1] having a thickness of 220 $\mu$m, and thus produce a laminated film for forming a concrete surface coating layer (IV-1) (hereafter referred to simply as a laminated film).

A concrete building material (a-1) for evaluation was produced as described hereafter using the resulting laminated film for forming a concrete surface coating layer (IV-1).

That is to say, the laminated film for forming a concrete surface coating layer (IV-1) was laminated so that the curable resin composition layer [I-1] side was overlaid on the surface that would become the outer wall side of a concrete panel that had been dried for 24 hours at 80°C and then cooled to room temperature ("Hebel Power Board Flat Panel" made by Asahi Kasei Construction Materials Corporation (thickness 37 mm)) (P), and this was laminated at a speed of 0.25 m/min. while pushing down at a linear pressure of 2 kg/cm with a rubber roller heated to 150°C (first lamination).

Subsequently, the polyester film [III] was peeled off from this laminated film (IV-1) and another laminated film for forming a concrete surface coating layer, which had been produced in the same manner as described above, was further laminated so that the curable resin composition layer [I-1] side thereof was overlaid on the curable resin composition layer [I-1] and, as before, this was laminated at a speed of 0.25 m/min. while pushing down at a linear pressure of 2 kg/cm with a rubber roller heated to 150°C (second lamination), to produce an uncured panel laminate.

This panel laminate was placed on a steel plate having a flat surface and the same area as the area of the panel laminate produced in the second lamination so that the face on which the laminated film was laminated was on the bottom and, in this state, it was left, for one hour, in a thermostatic chamber that had been heated to 130°C, whereby the curable resin composition layer [I-1] was cured, thus producing a concrete building material (a-1) for evaluation in which a coating layer was formed on the surface of the concrete panel (P).

The surface of the cured film (coating layer) side of the concrete building material (a-1) produced as described above was smooth, and when the polyester film [III] was peeled off and the surface was spray-painted with two coats of market available acrylic lacquer, a glossy flat design surface was produced.

Furthermore, two straight cuts were made with a cutter in the surface of the cured film, in a cross shape, and market available gummed tape was affixed so as to cover the intersection of these cuts at the center and fully bonded by rolling a 5 kg roller back and forth 10 times. When this gummed tape was peeled off from one end at a constant rate of 10 m/min., no separation of the cured film (coating layer) was observed in the cut area.

Next, with the side on which the cured film was not laminated upward, this concrete building material (a-1) was fixed in place in mid-air, and when the center of the panel face was struck strongly five times with a bare hand, no debris or the like was observed to fall from the cured film (coating layer) side.

Example 2

A concrete building material (a-2) for evaluation was produced as described hereafter using the laminated film for forming a concrete surface coating layer (IV-1) produced in Example 1.

That is to say, the laminated film for forming a concrete surface coating layer (IV-1) was laminated so that the curable resin composition layer [I-1] side was overlaid on the surface that would become the outer wall side of a concrete panel that had been dried for 24 hours at 80°C and then cooled to room temperature ("Hebel Power Board Flat Panel" made by Asahi Kasei Construction Materials Corporation (thickness 37 mm)) (P), and a smooth aluminum plate having a thickness of 10 mm was laminated on the polyester film [III] of the laminated film for forming a concrete surface coating layer (IV-1) to produce a laminate. This laminate was inserted into a vacuum packaging bag resulting from layering and laminating aluminum foil and polyethylene film and, after reducing the pressure in this vacuum packaging bag to 600 Pa with a vacuum packager, this was sealed (encapsulated), and by returning it to normal pressure, the aforementioned concrete panel (P), laminated film for forming a concrete surface coating layer (IV-1) and aluminum plate were brought into close contact with each other.

A laminate of this vacuum packaging bag and the concrete panel (P), laminated film for forming a concrete surface coating layer (IV-1) and aluminum plate, which had been brought into close contact with each other at the interior thereof and sealed (encapsulated) under vacuum therein, was left for one hour in a thermostatic device that had been heated to 130°C, whereby the curable resin composition layer [I-1] was caused to permeate and adhere to the concrete panel (P) and was cured. Subsequently, the vacuum packaging bag was opened and the aluminum plate was removed so as to obtain a concrete building material (a-2) for evaluation in which a coating layer was formed on the surface of the concrete panel (P).

The surface of the cured film (coating layer) side of the concrete building material (a-2) produced as described above was smooth, and when the polyester film [III] was peeled off and the surface was spray-painted with two coats of market available acrylic lacquer, a glossy flat design surface was produced.

Furthermore, two straight cuts were made with a cutter in the surface of the cured film, in a cross shape, and market available gummed tape was affixed so as to cover the intersection of these cuts at the center and fully bonded by rolling a 5 kg roller back and forth 10 times. When this gummed tape was peeled off from one end at a constant rate of 10 m/min., no separation of the cured film (coating layer) was observed in the cut area.

Next, with the side on which the cured film (coating layer) was not laminated upward, this concrete building material (a-2) was fixed in place in mid-air, and when the center of the panel face was struck strongly five times with a bare hand, no debris or the like was observed to fall from the cured film (coating layer) side.

Example 3

A resin solution, in which the binder polymer (A1) was diluted to 40% in ethyl acetate, and an oligomer solution, in which the reactive oligomer (B1) was diluted to 70% in 2-butanone, were mixed so that the weight ratio of the non-volatile components of the binder polymer (A1) and the reactive oligomer (B1) was 37:63.

Next, the polymerization initiator (D1) was admixed so as to constitute 2 parts with respect to 100 parts of the non-volatile components of the mixture of (A1) and (B1), to produce a curable resin composition [i-2] solution, in which the non-volatile component concentration was 56%.

Using this curable resin composition [i-2], a curable resin composition layer

[I-2] having a thickness of 230 $\mu$m was formed on the polyester film [III] having a thickness of 25 $\mu$m, in the same manner as in Example 1, to produce a laminated film for forming a concrete surface coating layer (IV-2). Using this laminated film for forming a concrete surface coating layer (IV-2), a concrete building material (a-3) for evaluation was produced in the same manner as in Example 1, other than the hot roller heating temperature being 175°C.

The surface of the cured film (coating layer) side of the concrete building material (a-3) produced as described above was smooth, and when the polyester film [III] was peeled off and the surface was spray-painted with two coats of market available acrylic lacquer, a glossy flat design surface was produced.

Furthermore, two straight cuts were made with a cutter in the surface of the cured film (coating layer) in a cross shape and market available gummed tape was affixed so as to cover the intersection of these cuts at the center and fully bonded by rolling a 5 kg roller back and forth 10 times. When this gummed tape was peeled off from one end at a constant rate of 10 m/min., no separation of the cured film (coating layer) was observed in the cut area.

Next, with the side on which the cured film (coating layer) was not laminated upward, this concrete building material (a-3) was fixed in place in mid-air, and when the center of the panel face was struck strongly five times with a bare hand, no debris or the like was observed to fall from the cured film (coating layer) side.

Example 4

A resin solution, in which the binder polymer (A1) was diluted to 40% in ethyl acetate, and oligomer solution in which the reactive oligomer (B1) was diluted to 70% in 2-butanone were mixed so that the weight ratio of the non-volatile components of the binder polymer (A1) to the reactive oligomer (B1) was 40:60, whereafter the reactive monomer (C2) was admixed so as to constitute 12 parts with respect to a total of 100 parts of the non-volatile components of the binder polymer (A1) and the reactive oligomer (B1).

Next, the polymerization initiator (D2) was admixed so as to constitute 2 parts with respect to 100 parts of the non-volatile components of the mixture of (A1), (B1) and (C2), to produce a curable resin composition [i-3] solution in which the non-volatile component concentration was 56%.

Using this curable resin composition [i-3], a curable resin composition layer [I-3] having a thickness of 225 $\mu$m was formed on the polyester film [III] having a thickness of 25 $\mu$m, in the same manner as in Example 1, to produce a laminated film for forming a concrete surface coating layer (IV-3). Using this laminated film for forming a concrete surface coating layer (IV-3), a concrete building material (a-4) for evaluation was produced in the same manner as in Example 1, other than temperature at which this was left after bonding being 180°C.

The surface of the cured film (coating layer) side of the concrete building material (a-4) produced as described above was smooth, and when the polyester film [III] was peeled off and the surface was spray-painted with two coats of market available acrylic lacquer, a glossy flat design surface was produced.

Furthermore, two straight cuts were made with a cutter in the surface of the cured film (coating layer) in a cross shape and market available gummed tape was affixed so as to cover the intersection of these cuts at the center and fully bonded by rolling a 5 kg roller back and forth 10 times. When this gummed tape was peeled off from one end at a constant rate of 10 m/min., no separation of the cured film (coating layer) was observed in the cut area.

Next, with the side on which the cured film (coating layer) was not laminated upward, this concrete building material (a-4) was fixed in place in mid-air, and when the center of the panel face was struck strongly five times with a bare hand, no debris or the like was observed to fall from the cured film (coating layer) side.

Examples 5 to 13

The laminated film for forming a concrete surface coating layer described below was used in the following Examples 5 to 13.

A resin solution, in which the binder polymer (A1) was diluted to 40% in ethyl acetate, and an oligomer solution, in which the reactive oligomer (B1) was diluted to 70% in 2-butanone, was mixed so that the weight ratio of the non-volatile components of the binder polymer (A1) to the reactive oligomer (B1) was 40:60, whereafter the reactive monomer (C1) was admixed so as to constitute 20 parts with respect to a total of 100 parts of the non-volatile components of the binder polymer (A1) and the reactive oligomer (B1).

Next, the polymerization initiator (D1) was admixed so as to constitute 2 parts with respect to 100 parts of the non-volatile components of the mixture of (A1), (B1) and (C1), to produce a curable resin composition [i-1] solution in which the non-volatile component concentration was 56%.

This curable resin composition [i-1] solution was continuously flow cast on a polyester film [III] having a thickness of 25 $\mu$m, with a comma coater set to a gap width of 0.5 mm, and this was further continuously dried for 12 minutes at 70°C and for 6 minutes at 90°C, so as to form a curable resin composition layer [I-1] having a thickness of 220 $\mu$m, and thus produce a laminated film for forming a concrete surface coating layer (IV-1).

Next, 2-butanone was added to the aforementioned curable resin composition [i-1] solution and calcium carbonate (E1) was added so as to constitute 80 parts with respect to a total of 100 parts of the non-volatile components of the binder polymer (A1) and the reactive oligomer (B1) in the curable resin composition [i-1] solution, whereafter this was stirred to uniformity, so as to produce a curable resin composition [ii-1] solution.

In the same manner as with the curable resin composition [i-1] solution, this curable resin composition [ii-1] solution was continuously flow cast on a polyester film [III] having a thickness of 25 $\mu$m and then dried, so as to form a curable resin composition layer [II-1] having a thickness of 250 $\mu$m and thus produce a laminated film for forming a concrete surface coating layer (IV-4).

Next, a foaming agent (F) ("Cellborn SC-K", made by Eiwa Chemical Industry Co., Ltd.) principally composed of sodium hydrogen carbonate was added to the aforementioned curable resin composition [ii-1] solution so as to constitute 5 parts with respect to a total of 100 parts of the non-volatile components of the binder polymer (A1) and the reactive oligomer (B1) in this [ii-1] solution, and this was stirred to uniformity, to produce a curable resin composition [ii-2] solution.

In the same manner as with the aforementioned curable resin composition [i-1] solution, this curable resin composition [ii-2] solution was continuously flow cast on a polyester film [III] having a thickness of 25 $\mu$m and then dried, so as to form a curable resin composition layer [II-2] having a thickness of 250 $\mu$m and thus produce a laminated film for forming a concrete surface coating layer (IV-5).

Example 5

A concrete building material (a-5) for evaluation was produced as described hereafter using the resulting laminated films (IV-1) and (IV-4).

That is to say, the laminated film (IV-1) was laminated so the curable resin composition layer [I-1] side was overlaid on the surface that would become the outer wall side of a concrete panel that had been dried for 24 hours at 80°C and then cooled to room temperature ("Hebel Power Board Flat Panel" made by Asahi Kasei Construction Materials Corporation (thickness 37 mm)) (P), and this was laminated at a speed of 0.25 m/min. while pushing down at a linear pressure of 2 kg/cm with a rubber roller heated to 150°C (first lamination).

Subsequently, the polyester film [III] was peeled off from this laminated film (IV-1) and the laminated film (IV-4) was further laminated so that the curable resin composition layer [II-1] side thereof was overlaid on the curable resin composition layer [I-1] and, as before, this was laminated at a speed of 0.25 m/min. while pushing down at a linear pressure of 2 kg/cm with a rubber roller heated to 150°C (second lamination), to produce an uncured panel laminate having a curable resin composition layer [II-1].

This panel laminate was placed on a steel plate having a flat surface and the same area as the area of the panel laminate produced in the second lamination so that the face on which the laminated film was laminated was on the bottom and, in this state, it was left, for one hour, in a thermostatic chamber that had been heated to 130°C, whereby the curable resin composition layers [I-1] and [II-1] were cured, thus producing a concrete building material (a-5) for evaluation.

The surface of the cured film side of the concrete building material (a-5) produced as described above was smooth, and when the polyester film [III] was peeled off and the surface was spray-painted with two coats of market available acrylic lacquer, a glossy flat design surface was produced.

Furthermore, two straight cuts were made with a cutter in the surface of the cured film, in a cross shape, and market available gummed tape was affixed so as to cover the intersection of these cuts at the center and fully bonded by rolling a 5 kg roller back and forth 10 times. When this gummed tape was peeled off from one end at a constant rate of 10 m/min., no separation of the cured film was observed in the cut area.

Next, with the side on which the cured film was not laminated upward, this panel laminate (a-5) was fixed in place in mid-air, and when the center of the panel face was struck strongly five times with a bare hand, no debris or the like was observed to fall from the cured film side.

Next, this panel laminate (a-5) was cut with an electric saw on which a blade for autoclaved lightweight concrete had been mounted so that the cut was perpendicular to the bonding face of the panel laminate (a-5); the cut face was sanded with #40 sandpaper and then #400 sandpaper so that the boundary between the surface of the concrete panel and the curable resin composition layers [I-1] and [II-1] laminated thereon could be clearly recognized with a magnifier; and the thickness from the average line of that boundary to the surface of the curable resin composition layer [II-1] was measured, which was 364 $\mu$m.

Note that the aforementioned average line of the boundary refers to a horizontal reference axis wherein, when a section of a certain size, such as a section of 5 to 10 cm is viewed, and the positional coordinates of the irregularities in the surface of the concrete panel (ALC), which is the substrate, are totaled the sum of the positional coordinates obtained is zero.

*Example 6*

Other than using a concrete panel that had undergone surface grinding, a concrete building material (a-6) for evaluation was produced in the same manner as in Example 5, using the laminated films (IV-1) and (IV-4).

Specifically, the surface that would become the outer wall side of a concrete panel that had been dried for 24 hours at 80°C and then cooled to room temperature ("Hebel Power Board Flat Panel" made by Asahi Kasei Construction Materials Corporation (thickness 37 mm)) (P) was uniformly ground to a depth of 3 mm with a grinder fitted with #40 sandpaper, so as to expose more foaming bubbles than on the surface before grinding. The laminated film (IV-1) was laminated so that the curable resin composition layer [I-1] side was overlaid on this new surface, whereafter a concrete building material (a-6) for evaluation was produced in the same manner as in Example 1.

The surface of the cured film side of the concrete building material (a-6) produced as described above was smooth, and when the polyester film [III] was peeled off and the surface was spray-painted with two coats of market available acrylic lacquer, a glossy flat design surface was produced.

Furthermore, two straight cuts were made with a cutter in the surface of the cured film, in a cross shape, and market available gummed tape was affixed so as to cover the intersection of these cuts at the center and fully bonded by rolling a 5 kg roller back and forth 10 times. When this gummed tape was peeled off from one end at a constant rate of 10 m/min., no separation of the cured film was observed in the cut area.

Next, with the side on which the cured film was not laminated upward, this concrete building material (a-6) was fixed in place in mid-air, and when the center of the panel face was struck strongly five times with a bare hand, no debris or the like was observed to fall from the cured film side.

Next, this concrete building material (a-6) was cut with an electric saw on which a blade for autoclaved lightweight concrete had been mounted so that the cut was perpendicular to the bonding face of the concrete building material (a-6), the cut face was sanded with #40 sandpaper and then #400 sandpaper so that the boundary between the surface of the concrete panel and the curable resin composition layers [I-1] and [II-1] laminated thereon could be clearly recognized with a magnifier, and the thickness from the average line of that boundary to the surface of the curable resin composition layer [II-1] was measured, which was 237 $\mu$m.

*Example 7*

The uncured panel laminate produced in Example 5 was cured as described below so as to produce a concrete building material (a-7) for evaluation.

That is to say, an engraved steel plate having the same area as the area of the uncured panel laminate, which had been heated to 130°C in advance, was placed on the curable resin composition layer [II-1] side of the panel laminate, and a 50 kgf/cm$^2$ load was applied and, in this state, it was left, for 60 minutes, in a thermostatic chamber that had been heated to 130°C, whereby the curable resin composition layers [I-1] and [II-1] were cured, thus producing a concrete building material (a-7) for evaluation. The surface of this steel plate had been engraved to a depth of 100 $\mu$m with a houndstooth check pattern in which squares having 5 mm sides were equidistantly arrayed.

When the polyester film [III] was peeled off from the concrete building material (a-7) produced as described above and the surface was spray-painted with two coats of market available acrylic lacquer, a surface with a glossy design in which there were houndstooth check recesses and protrusions was produced.

Furthermore, two straight cuts were made with a cutter in the surface of the cured film, in a cross shape, and market available gummed tape was affixed so as to cover the intersection of these cuts at the center and fully bonded by rolling a 5 kg roller back and forth 10 times. When this gummed tape was peeled off from one end at a constant rate of 10 m/min., no separation of the cured film was observed in the cut area.

Next, with the side on which the cured film was not laminated upward, this concrete building material (a-7) was fixed in place in mid-air, and when the center of the panel face was struck strongly five times with a bare hand, no debris or the like was observed to fall from the cured film side.

Next, this concrete building material (a-7) was cut with an electric saw on which a blade for autoclaved lightweight concrete had been mounted so that the cut was perpendicular to the bonding face of the concrete building material (a-7), the cut face was sanded with #40 sandpaper and then #400 sandpaper so that the boundary between the surface of the concrete panel and the curable resin composition layers [I-1] and [II-1] laminated thereon could be clearly recognized with a magnifier, and the thickness from the average line of that boundary to the surface of the curable resin composition layer [II-1] was measured, which was 387 $\mu$m in the thick portions of the houndstooth check and 292 $\mu$m in the thin portions of the houndstooth check.

*Example 8*

The uncured panel laminate produced in example 6 was cured as described below so as to produce a concrete building material (a-8) for evaluation.

That is to say, an engraved steel plate having the same area as the area of the uncured panel laminate, which had been heated to 130°C in advance, was placed on the curable resin composition layer [II-1] side of the panel laminate, and a 50 kgf/cm$^2$ load was applied and, in this state, it was left, for 60 minutes, in a thermostatic chamber that had been heated to 130°C, whereby the curable resin composition layers [I-1] and [II-1] were cured, thus producing a concrete building material (a-8) for evaluation. The surface of this steel plate had been engraved to a depth of 100 $\mu$m with a houndstooth check pattern in which squares having 5 mm sides were equidistantly arrayed.

When the polyester film [III] was peeled off from the concrete building material (a-8) produced as described above and the surface was spray-painted with two coats of market available acrylic lacquer, a surface with a glossy design in which there were houndstooth check recesses and protrusions was produced.

Furthermore, two straight cuts were made with a cutter in the surface of the cured film, in a cross shape, and market available gummed tape was affixed so as to cover the intersection of these cuts at the center and fully bonded by rolling a 5 kg roller back and forth 10 times. When this gummed tape was peeled off from one end at a constant rate of 10 m/min., no separation of the cured film was observed in the cut area.

Next, with the side on which the cured film was not laminated upward, this concrete building material (a-8) was fixed in place in mid-air, and when the center of the panel face was struck strongly five times with a bare hand, no debris or the like was observed to fall from the cured film side.

Next, this concrete building material (a-8) was cut with an electric saw on which a blade for autoclaved lightweight concrete had been mounted so that the cut was perpendicular to the bonding face of the concrete building material (a-8), the cut face was sanded with #40 sandpaper and then #400 sandpaper so that the boundary between the surface of the concrete panel and the curable resin composition layers [I-1] and [II-1] laminated thereon could be clearly recognized with a magnifier, and the thickness from the average line of that boundary to the surface of the curable resin composition layer [II-1] was measured, which was 249 $\mu$m in the thick portions of the houndstooth check and 144 $\mu$m in the thin portions of the houndstooth check.

*Example 9*

The curable resin composition layer [I-1] of the laminated film (IV-1) and the curable resin composition layer [II-1] of the laminated film (IV-4) were overlaid and bonded at a speed of 1 m/min. with a lamination roller heated to 100°C. The polyester film [III] was peeled off from the curable resin composition layer [I-1] of this laminate so as to prepare a laminated film for forming a concrete surface coating layer (IV-6) in accordance with the laminated film for forming a concrete surface coating layer (20) of the present invention shown in FIG. 2.

In the same manner as in Example 5, the laminated film for forming a concrete surface coating layer (IV-6) was laminated so that the curable resin composition layer [I-1] of the laminated film for forming a concrete surface coating layer (IV-6) was brought into contact with the surface that would become the outer wall side of a concrete panel, and this was laminated at a speed of 0.25 m/min. while pressing down with a rubber roller heated to 150°C, at a linear pressure of 2 kg/cm to produce an uncured panel laminate.

This panel laminate was placed on a steel plate having a flat surface and the same area as the area of the panel laminate produced so that the face on which the laminated film was laminated was on the bottom and, in this state, it was left, for one hour, in a thermostatic chamber that had been heated to 130°C, whereby the curable resin composition layers [I-1] and [II-1] were cured, thus producing a concrete building material (a-9) for evaluation.

The surface of the cured film side of the concrete building material (a-9) produced as described above was smooth, and when the polyester film [III] was peeled off and the surface was spray-painted with two coats of market available acrylic lacquer, a glossy flat design surface was produced.

Furthermore, two straight cuts were made with a cutter in the surface of the cured film, in a cross shape, and market available gummed tape was affixed so as to cover the intersection of these cuts at the center and fully bonded by rolling a 5 kg roller back and forth 10 times. When this gummed tape was peeled off from one end at a constant rate of 10 m/min., no separation of the cured film was observed in the cut area.

Next, with the side on which the cured film was not laminated upward, this concrete building material (a-9) was fixed in place in mid-air, and when the center of the panel face was struck strongly five times with a bare hand, no debris or the like was observed to fall from the cured film side.

Next, when concrete building material (a-9) was cut with an electric saw on which a blade for autoclaved lightweight concrete had been mounted so that the cut was perpendicular to the bonding face of the concrete building material (a-9), the cut face was sanded with #40 sandpaper and then #400 sandpaper so that the boundary between the surface of the concrete panel and the curable resin composition layers [I-1] and [II-1] laminated thereon could be clearly recognized with a magnifier, and the thickness from the average line of that boundary to the surface of the curable resin composition layer [II-1] was measured, which was 348 $\mu$m.

*Example 10*

Other than using a concrete panel that had undergone surface grinding, a concrete building material (a-10) for evaluation was produced in the same manner as in Example 9, using the laminated films (IV-1) and (IV-4).

Specifically, the surface that would become the outer wall side of a concrete panel that had been dried for 24 hours at 80°C and then cooled to room temperature ("Hebel Power Board Flat Panel" made by Asahi Kasei Construction Materials Corporation (thickness 37 mm)) (P) was uniformly ground to a depth of 3 mm with a grinder fitted with #40 sandpaper, so as to expose more foaming bubbles than on the surface before grinding. The laminated film (IV-1) was laminated so that the curable resin composition layer [I-1] side was overlaid on this new surface, whereafter a concrete building material (a-10) for evaluation was produced in the same manner as in Example 9.

The surface of the cured film side of the concrete building material (a-10) produced as described above was smooth, and when the polyester film [III] was peeled off and the surface was spray-painted with two coats of market available acrylic lacquer, a glossy flat design surface was produced.

Furthermore, two straight cuts were made with a cutter in the surface of the cured film, in a cross shape, and market available gummed tape was affixed so as to cover the intersection of these cuts at the center and fully bonded by rolling a 5 kg roller back and forth 10 times. When this gummed tape was peeled off from one end at a constant rate of 10 m/min., no separation of the cured film was observed in the cut area.

Next, with the side on which the cured film was not laminated upward, this concrete building material (a-10) was fixed in place in mid-air, and when the center of the panel face was struck strongly five times with a bare hand, no debris or the like was observed to fall from the cured film side.

Next, this concrete building material (a-10) was cut with an electric saw on which a blade for autoclaved lightweight concrete had been mounted so that the cut was perpendicular to the bonding face of the concrete building material (a-10), the cut face was sanded with #40 sandpaper and then #400 sandpaper so that the boundary between the surface of the concrete panel and the curable resin composition layers [I-1] and [II-1] laminated thereon could be clearly recognized with a magnifier, and the thickness from that boundary to the surface of the curable resin composition layer [II-1] was measured, which was 229 $\mu$m.

*Example 11*

A concrete building material (a-11) for evaluation was produced using the laminated films (IV-1) and (IV-5), in the same manner as in Example 5.

Specifically, the laminated film (IV-1) was laminated on the surface that would become the outer wall side of a concrete panel that had been dried for 24 hours at 80°C and then cooled to room temperature ("Hebel Power Board Flat Panel" made by Asahi Kasei Construction Materials Corporation (thickness 37 mm)) (P) so that the curable resin composition layer [I-1] side was overlaid in the same manner as in Example 5, and the polyester film [III] of the laminated film (IV-1) was peeled off in the same manner as Example 5. The laminated film (IV-5) was further laminated so that the curable resin composition layer [II-2] side was overlaid on the curable resin composition layer [I-1], whereafter a concrete building material (a-11) for evaluation was produced in the same manner as in Example 5.

The surface of the cured film side of the concrete building material (a-11) produced as described above was smooth, and when the polyester film [III] was peeled off and the surface was spray-painted with two coats of market available acrylic lacquer, a glossy flat design surface was produced.

Furthermore, two straight cuts were made with a cutter in the surface of the cured film, in a cross shape, and market available gummed tape was affixed so as to cover the intersection of these cuts at the center and fully bonded by rolling a 5 kg roller back and forth 10 times. When this gummed tape was peeled off from one end at a constant rate of 10 m/min., no separation of the cured film was observed in the cut area.

Next, with the side on which the cured film was not laminated upward, this concrete building material (a-11) was fixed in place in mid-air, and when the center of the panel face was struck strongly five times with a bare hand, no debris or the like was observed to fall from the cured film side.

Next, this concrete building material (a-11) was cut with an electric saw on which a blade for autoclaved lightweight concrete had been mounted so that the cut was perpendicular to the bonding face of the concrete building material (a-11), the cut face was sanded with #40 sandpaper and then #400 sandpaper so that the boundary between the surface of the concrete panel and the curable resin composition layers [I-1] and [II-2] laminated thereon could be clearly recognized with a magnifier, and the thickness from the average line of that boundary to the surface of the curable resin composition layer [II-2] was measured, which was 428 $\mu$m.

*Example 12*

Other than using another laminated film (IV-1) in place of the laminated film for forming a concrete surface coating layer (IV-4), a concrete building material (a-12) having two curable resin composition layers [I-1] and [I-1] was produced in the same manner as in Example 6.

Traces of the foaming surface irregularities in the autoclaved lightweight concrete were found on the surface of the cured film on the concrete building material (a-12) for evaluation produced as described above. When the polyester film [III] was peeled off and the surface was spray-painted with two coats of a market available acrylic lacquer, the traces of the foaming surface irregularities were substantially eliminated and a substantially flat design surface was produced but this was not sufficient to produce a glossy feel.

Furthermore, two straight cuts were made with a cutter in the surface of the cured film, in a cross shape, and market available gummed tape was affixed so as to cover the intersection of these cuts at the center and fully bonded by rolling a 5 kg roller back and forth 10 times. When this gummed tape was peeled off from one end at a constant rate of 10 m/min., no separation of the cured film was observed in the cut area.

Next, with the side on which the cured film was not laminated upward, this concrete building material (a-12) was fixed in place in mid-air, and when the center of the panel face was struck strongly five times with a bare hand, no debris or the like was observed to fall from the cured film side.

Next, this concrete building material (a-12) was cut with an electric saw on which an autoclaved lightweight concrete blade had been mounted so that the cut was perpendicular to the bonding face of the concrete building material (a-12), the cut face was sanded with #40 sandpaper and then #400 sandpaper so that the boundary between the surface of the concrete panel and the curable resin composition layers [I-1] and [I-1] laminated thereon could be clearly recognized with a magnifier, and the thickness from the average line of that boundary to the surface of one of the curable resin composition layers [I-1] was measured, which was 66 $\mu$m.

*Example 13*

Other than using another laminated film (IV-1) in place of the laminated film for forming a concrete surface coating layer (IV-4), an uncured panel laminate having two curable resin composition layers [I-1] and [I-1] was produced in the same manner as in Example 6.

An engraved steel plate having the same area as the area of the uncured panel laminate, which had been heated to 130°C in advance, was placed on the curable resin composition layer [I-1] side of the panel laminate, and a 50 kgf/cm$^2$ load was applied and, in this state, it was left, for 60 minutes, in a thermostatic chamber that had been heated to 130°C, whereby the curable resin composition layers [I-1] and [I-1] were cured, thus producing a concrete building material (a-13) for evaluation. The surface of this steel plate had been engraved to a depth of 100 μm with a houndstooth check pattern in which squares having 5 mm sides were equidistantly arrayed.

When the polyester film [III] was peeled off from the concrete building material (a-13) produced as described above and the surface was spray-painted with two coats of market available acrylic lacquer, a surface with a design in which there were houndstooth check recesses and protrusions was produced. However, within the houndstooth check pattern, the irregularities in the foam that was exposed in the autoclaved lightweight concrete were clearly reflected in the places where the resin was thin.

Furthermore, two straight cuts were made with a cutter in the surface of the cured film, in a cross shape, and market available gummed tape was affixed so as to cover the intersection of these cuts at the center and fully bonded by rolling a 5 kg roller back and forth 10 times. When this gummed tape was peeled off from one end at a constant rate of 10 m/min., no separation of the cured film was observed in the cut area.

Next, with the side on which the cured film was not laminated upward, this concrete building material (a-13) was fixed in place in mid-air, and when the center of the panel face was struck strongly five times with a bare hand, no debris or the like was observed to fall from the cured film side.

Next, this concrete building material (a-13) was cut with an electric saw on which a blade for autoclaved lightweight concrete had been mounted so that the cut was perpendicular to the bonding face of the concrete building material (a-13), the cut face was sanded with #40 sandpaper and then #400 sandpaper so that the boundary between the surface of the concrete panel and the curable resin composition layers [I-1] and [I-1] laminated thereon could be clearly recognized with a magnifier, and the thickness from the average line of that boundary to the surface of one of the curable resin composition layers [I-1] was measured, which was 72 μm in the thick portions of the houndstooth check and 5 μm or less (unmeasurable) in the thin portions of the houndstooth check.

By virtue of the foregoing effects, it is possible to form a coating layer on a concrete surface by bonding a specific laminated film for forming a concrete surface coating layer on concrete such as autoclaved lightweight concrete (ALC) and curing it, which allows for good workability and productivity. Furthermore, the surface of the concrete panel on which the laminated film has been bonded and cured is smooth and the surface smoothness is excellent, such that the design forming characteristics are excellent. Further, because the laminated film can be adhered to the concrete surface with sufficient permeation into the concrete, the protection of the concrete surface is excellent.

**Evaluation of the filling of typical surface recesses**

The gaps resulting from irregularities in the surface of concrete such as, for example, autoclaved lightweight concrete (ALC) are normally within the range of approximately 0.1 to 0.5 mm, but due to concrete manufacturing characteristics, if for example 1 m$^2$ of surface is observed, there will be recesses having gaps exceeding the upper limit of this normal range in anywhere from several places to several dozen places.

In endowing the surface of concrete, and in particular ALC, with design characteristics, when surface smoothness is sought, if the resin of the laminated film for concrete surface coatings does not sufficiently fill the recesses that have gaps exceeding the upper limit of the normal range, the recesses will appear undiminished at the surface, due to the insufficient resin filling in that area, which may be detrimental to the design characteristics.

Here, in order to evaluate the resin filling of these extreme recesses, a test substrate was made, wherein a square of ALC was prepared having 30 cm sides, and a total of 25 inverted-cone shaped recesses with a surface opening diameter of 1 mm and a depth of 1 mm were formed in the ALC surface, 5 being formed in the lengthwise direction and 5 being formed in the crosswise direction, with 5 cm gaps therebetween, in both the lengthwise and crosswise directions.

The concrete panels used in Examples 5, 9, 11 and 12 were changed to the test substrate described above but, other than this, the laminated film was bonded and cured in the same manner as in the methods listed in the respective examples. The resin filling of the 25 recesses having extreme gaps was then visually evaluated.

The evaluation criteria were as follows.

good: smooth, with complete filling
fair: recesses can be clearly seen in places

poor: appears completely recessed

The results were that Example 5 was "fair", Example 9 was "fair," Example 11 was "good," and Example 12 was "poor."

By virtue of the foregoing results, it is possible to form a coating layer on a concrete surface by bonding the laminated film for forming a concrete surface coating layer of the present invention on concrete such as autoclaved lightweight concrete (ALC) and curing it, such that the laminated film of the present invention has good workability and productivity. Furthermore, the surface of the concrete panel on which the laminated film of the present invention has been bonded and cured is smooth, and the surface smoothness is excellent, such that the design forming characteristics are excellent. Further, the laminated film of the present invention can be adhered to concrete surfaces, and therefore is excellently protective of concrete surfaces.

[Industrial Applicability]

The laminated film for forming a concrete surface coating layer of the present invention can be used in order to increase the degree of freedom in the design of concrete surfaces, such as autoclaved lightweight concrete (ALC), which is used in the outer walls of buildings. Furthermore, complex painting processes during construction can be replaced with a process at the autoclaved lightweight concrete (ALC) factory, which can be useful in achieving simplification of on-site work. Further, this can be useful in realizing decreases in soiling and damage during transport and storage of autoclaved lightweight concrete (ALC).

[Reference Signs List]

| | |
|---|---|
| 1: | layer comprising curable resin composition (curable resin composition layer) |
| 2: | support film |
| 3: | concrete |
| 3a: | concrete surface |
| 4: | coating layer |
| 5: | concrete building material |
| 10, 20: | laminated film for forming a concrete surface coating layer |
| 11: | layer comprising the curable resin composition [i] substantially not comprising the filler (E) |
| 12: | layer comprising the curable resin composition [ii] comprising the filler (E) |

**Claims**

**1.** A laminated film for forming a concrete surface coating layer, wherein

a layer comprising a curable resin composition and a support film are laminated,
the curable resin composition is a curable resin composition comprising: a binder polymer (A); a reactive oligomer (B) having one or more unsaturated groups; a reactive monomer (C) having one or more unsaturated groups; and a polymerization initiator (D),
the binder polymer (A) is a (meth)acrylic resin (a1),
the reactive oligomer (B) having one or more unsaturated groups is a urethane (meth)acrylate compound (b1),
the polymerization initiator (D) is a thermal polymerization initiator and is an azobis compound having a 10-hour half-life temperature of 50°C or more,
the thickness of the layer comprising the curable resin composition is 30 $\mu$m or more, and
after curing the layer comprising the curable resin composition, the support film may be peeled off from said layer, as necessary.

**2.** The laminated film for forming a concrete surface coating layer according to claim 1, wherein the reactive monomer (C) having one or more unsaturated groups is a polyfunctional (meth)acrylate compound (c1).

**3.** The laminated film for forming a concrete surface coating layer according to any of claims 1 or 2, wherein the curable resin composition comprises a filler (E).

4. The laminated film for forming a concrete surface coating layer according to claim 3, wherein the curable resin composition further comprises a foaming agent (F).

5. A laminated film for forming a concrete surface coating layer wherein a support film, a layer comprising the curable resin composition according to claim 3 or 4, and a layer comprising the curable resin composition according to any of claims 1 or 2 are laminated in a layer configuration in this order.

6. The laminated film for forming a concrete surface coating layer according to any of claims 1 to 5, wherein a protective film is laminated on the side opposite to the support film, in the thickness direction.

7. The laminated film for forming a concrete surface coating layer according to any of claims 1 to 6, wherein the concrete is autoclaved lightweight concrete.

8. A concrete building material comprising concrete, and a concrete surface coating layer, which is formed by curing a layer comprising the curable resin composition according to any of claim 1 to 7, and which coats the surface of the concrete.

9. The concrete building material according to claim 8, wherein the concrete is autoclaved lightweight concrete.

10. A method for manufacturing the concrete building material according to claim 8 or 9, comprising:

a step of bonding the laminated film for forming a concrete surface coating layer according to any of claims 1 to 7 to the concrete so that the layer comprising the curable resin composition contacts the surface of the concrete; and

a step of curing by heat the layer comprising the curable resin composition so as to form a concrete surface coating layer on the surface of the concrete.

**Patentansprüche**

1. Laminierter Film zum Bilden einer Betonoberflächen-Beschichtungsschicht, wobei eine Schicht, die eine härtbare Harzzusammensetzung und einen Tragefilm aufweist, laminiert ist,

wobei die härtbare Harzzusammensetzung eine härtbare Harzzusammensetzung ist, die aufweist: ein Binderpolymer (A); ein reaktives Oligomer (B) mit einer oder mehreren ungesättigten Gruppen; ein reaktives Monomer (C) mit einer oder mehreren ungesättigten Gruppen; und einen Polymerisierungsinitiator (D), wobei das Binderpolymer (A) ein (Meth)acrylharz (al) ist,

wobei das reaktive Oligomer (B) mit einer oder mehreren ungesättigten Gruppen eine Urethan-(Meth)acrylatverbindung (b1) ist,

wobei der Polymerisierungsinitiator (D) ein thermischer Polymerisierungsinitiator ist und eine Azobis-Verbindung ist, die eine 10-stündige Halbwertszeittemperatur von 50°C oder mehr aufweist,

wobei die Dicke der Schicht, die die härtbare Harzzusammensetzung aufweist, 30 $\mu$m oder mehr beträgt, und wobei nach dem Härten der Schicht, die die härtbare Harzzusammensetzung aufweist, der Tragefilm von der Schicht abgeschält werden kann, falls nötig.

2. Laminierter Film zum Bilden einer Betonoberflächen-Beschichtungsschicht nach Anspruch 1, wobei das reaktive Monomer (C), das eine oder mehrere ungesättigte Gruppen aufweist, eine polyfunktionale (Meth)acrylatverbindung (c1) ist.

3. Laminierter Film zum Bilden einer Betonoberflächen-Beschichtungsschicht nach einem der Ansprüche 1 oder 2, wobei die härtbare Harzzusammensetzung ein Füllmaterial (E) aufweist.

4. Laminierter Film zum Bilden einer Betonoberflächen-Beschichtungsschicht nach Anspruch 3, wobei die härtbare Harzzusammensetzung ferner ein Schäummittel (F) aufweist.

5. Laminierter Film zum Bilden einer Betonoberflächen-Beschichtungsschicht, wobei ein Tragefilm, eine Schicht, die die härtbare Harzzusammensetzung nach Anspruch 3 oder 4 aufweist, und eine Schicht, die die härtbare Harzzusammensetzung nach einem der Ansprüche 1 oder 2 aufweist, in einer Schichtkonfiguration in dieser Reihenfolge laminiert sind.

6. Laminierter Film zum Bilden einer Betonoberflächen-Beschichtungsschicht nach einem der Ansprüche 1 bis 5, wobei ein Schutzfilm an der Seite laminiert ist, die dem Tragefilm in der Dickenrichtung gegenüberliegt.

7. Laminierter Film zum Bilden einer Betonoberflächen-Beschichtungsschicht nach einem der Ansprüche 1 bis 6, wobei der Beton ein autoklavierter Leichtbeton ist.

8. Beton-Baumaterial, aufweisend Beton und eine Betonoberflächen-Beschichtungsschicht, die durch Härten einer Schicht gebildet wird, die die härtbare Harzzusammensetzung nach einem der Ansprüche 1 bis 7 aufweist, und die die Oberfläche des Betons beschichtet.

9. Beton-Baumaterial nach Anspruch 8, wobei der Beton ein autoklavierter Leichtbeton ist.

10. Verfahren zum Herstellen des Beton-Baumaterials nach Anspruch 8 oder 9, aufweisend:

einen Schritt des Bindens des laminierten Films zum Bilden einer Betonoberflächen-Beschichtungsschicht nach einem der Ansprüche 1 bis 7 an den Beton, so dass die Schicht, die die härtbare Harzzusammensetzung aufweist, die Oberfläche des Betons berührt; und
einen Schritt des Härtens, durch Wärme, der Schicht, die die härtbare Harzzusammensetzung aufweist, so dass eine Betonoberflächen-Beschichtungsschicht auf der Oberfläche des Betons gebildet wird.

## Revendications

1. Film stratifié pour former une couche de revêtement de surface en béton, où

une couche comprenant une composition de résine durcissable et un film de support sont stratifiés,
la composition de résine durcissable est une composition de résine durcissable comprenant : un polymère de liant (A) ; un oligomère réactif (B) ayant un ou plusieurs groupes insaturés ; un monomère réactif (C) ayant un ou plusieurs groupes insaturés ; et un initiateur de polymérisation (D),
le polymère de liant (A) est une résine (méth)acrylique (a1), l'oligomère réactif (B) ayant un ou plusieurs groupes insaturés est un composé de (méth)acrylate d'uréthane (b1),
l'initiateur de polymérisation (D) est un initiateur de polymérisation thermique et est un composé azobis ayant une température de demi-vie de 10 heures de 50°C ou supérieure,
l'épaisseur de la couche comprenant la composition de résine durcissable est de 30 μm ou supérieure, et après durcissement de la couche comprenant la composition de résine durcissable, le film de support peut être détaché de ladite couche, si nécessaire.

2. Film stratifié pour former une couche de revêtement de surface en béton selon la revendication 1, dans lequel le monomère réactif (C) ayant un ou plusieurs groupes insaturés est un composé de (méth)acrylate polyfonctionnel (c1).

3. Film stratifié pour former une couche de revêtement de surface en béton selon l'une quelconque des revendications 1 ou 2, dans lequel la composition de résine durcissable comprend une charge (E).

4. Film stratifié pour former une couche de revêtement de surface en béton selon la revendication 3, dans lequel la composition de résine durcissable comprend de plus un agent moussant (F).

5. Film stratifié pour former une couche de revêtement de surface en béton, dans lequel un film de support, une couche comprenant la composition de résine durcissable selon la revendication 3 ou 4, et une couche comprenant la composition de résine durcissable selon l'une quelconque des revendications 1 ou 2 sont stratifiés dans une configuration de couches dans cet ordre.

6. Film stratifié pour former une couche de revêtement de surface en béton selon l'une quelconque des revendications 1 à 5, dans lequel un film protecteur est stratifié sur le côté opposé au film de support, dans la direction d'épaisseur.

7. Film stratifié pour former une couche de revêtement de surface en béton selon l'une quelconque des revendications 1 à 6, dans lequel le béton est du béton de poids léger autoclavé.

8. Matériau de construction en béton comprenant du béton, et une couche de revêtement de surface en béton, qui est formée par durcissement d'une couche comprenant la composition de résine durcissable selon l'une quelconque des revendications 1 à 7, et qui recouvre la surface du béton.

9. Matériau de construction de béton selon la revendication 8, dans lequel le béton est du béton de poids léger autoclavé.

10. Procédé de fabrication du matériau de construction en béton selon la revendication 8 ou 9, comprenant :

une étape de liaison du film stratifié pour former une couche de revêtement de surface en béton selon l'une quelconque des revendications 1 à 7 au béton de sorte que la couche comprenant la composition de résine durcissable est en contact avec la surface du béton ; et
une étape de durcissement par la chaleur de la couche comprenant la composition de résine durcissable afin de former une couche de revêtement de surface en béton sur la surface du béton.

EP 3 147 271 B1

Fig. 1

10

2

1

Fig. 2

20

2

12

11

32

Fig. 3

(a)

3a
3

(b)

10

2
1

3a
3

(c)

2
1
3

(d)

2
4
3

(e)

4
5
3

**EP 3 147 271 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1179869 A
- US 5928778 A